# EUROPÄISCHE PATENTSCHRIFT

(11) **EP 4 527 275 B1**
(45) Veröffentlichungstag und Bekanntmachung des Hinweises auf die Patenterteilung: **01.07.2026**
(21) Anmeldenummer: 24200999.1
(22) Anmeldetag: 18.09.2024
(51) Int. Cl.: A47L 11/30

(54) **VERFAHREN ZUM BETREIBEN EINES SYSTEMS UND SYSTEM UMFASSEND EINE BODENREINIGUNGSMASCHINE UND EINE VERSORGUNGSEINRICHTUNG**
METHOD FOR OPERATING A SYSTEM AND SYSTEM COMPRISING A FLOOR CLEANING MACHINE AND A SUPPLY DEVICE
PROCÉDÉ DE FONCTIONNEMENT D'UN SYSTÈME ET SYSTÈME COMPRENANT UNE MACHINE DE NETTOYAGE DE SOL ET UN DISPOSITIF D'ALIMENTATION

(30) Priorität: 19.09.2023 DE 102023125323
(43) Veröffentlichungstag der Anmeldung: 26.03.2025
(73) Patentinhaber: Hako GmbH, 23843 Bad Oldesloe (DE)
(72) Erfinder: Zimny, Axel, 22927 Großhansdof (DE); Brandt, Björn, 22926 Ahrensburg (DE); Reimers, Arne, 24235 Stein (DE); Wulf, Christian, 23919 Berkenthin (DE)
(74) Vertreter: Bird & Bird LLP - Hamburg

(56) Entgegenhaltungen:
- DE-A1- 102017 115 135
- US-A1- 2020 121 153
- US-A1- 2020 275 815

## Beschreibung

Die vorliegende Erfindung betrifft ein Verfahren zum Betreiben eines Systems und ein System umfassend eine Bodenreinigungsmaschine und eine Versorgungseinrichtung.

Systeme aus einer Bodenreinigungsmaschine und einer Versorgungseinrichtung sind aus dem Stand der Technik bekannt. Die aus dem Stand der Technik bekannten Bodenreinigungsmaschinen, wobei es sich dabei beispielsweise um autonom arbeitende Reinigungsroboter, handgeführte Bodenreinigungsmaschinen und Aufsitzmaschinen handeln kann, weisen in der Regel ein Fahrwerk mit wenigstens einem Rad, das gegebenenfalls über einen Antrieb angetrieben wird, eine Reinigungseinrichtung, beispielsweise in Form einer Bürstenanordnung, einer Wischeinrichtung und/oder einer Saugeinrichtung, einen Frischwasserbehälter zur Aufnahme von Frischwasser, einen Schmutzwasserbehälter zur Aufnahme von Schmutzwasser und eine Kopplungsanordnung zum Koppeln der Bodenreinigungsmaschine an die Versorgungseinrichtung auf. Bekannte Versorgungseinrichtungen weisen in der Regel ebenfalls eine Kopplungsanordnung zum Koppeln der Versorgungseinrichtung an die Bodenreinigungsmaschine, eine Spannungsversorgung, eine Frischwasserzuführung und eine Schmutzwasseraufnahme auf.

Ebenfalls bekannt sind Verfahren zum Betreiben eines Systems umfassend eine solche Bodenreinigungsmaschine und eine solche Versorgungseinrichtung. Bei den bekannten Verfahren wird die Bodenreinigungsmaschine in der Regel vor der Versorgungseinrichtung positioniert und dann auf diese zubewegt, um die Bodenreinigungsmaschine mit der Versorgungseinrichtung über die Kopplungsanordnungen zu koppeln, und von dieser wegbewegt, um die Bodenreinigungsmaschine von der Versorgungseinrichtung zu entkoppeln.

Bei derartigen Bodenreinigungsmaschinen, Versorgungseinrichtungen und Verfahren zum Betreiben dieser hat es sich als problematisch erwiesen, dass zur Kopplung der Bodenreinigungsmaschine diese auf die Versorgungseinrichtungen zubewegt werden und die Versorgungseinrichtungen dabei feststehen. Bei den bekannten Verfahren ist es notwendig, dass die Bodenreinigungsmaschine zur Kopplung bis zum Kontakt der Kopplungseinheiten an die Versorgungseinrichtung heranfährt und darüber hinaus gegen die Versorgungseinrichtung drückt, damit die Kopplungseinheiten eine sichere Verbindung eingehen. Solche Kopplungsvorgänge können zusätzliche Belastungen bei der Versorgungseinrichtung hervorrufen, sodass es zu Beschädigungen an der Versorgungseinrichtung oder der Bodenreinigungsmaschine und deren Kopplungsanordnungen kommen kann. Darüber hinaus kann die Versorgungseinrichtung beim Koppelvorgang verkippt oder verschoben werden, was ebenfalls zu Fehlern führen kann. Ebenfalls nachteilig ist, dass die Bodenreinigungsmaschinen zum Lösen der Kopplung der Koppeleinheiten rückwärtsfahren müssen. Dadurch ergibt sich zum einen ein höherer Platzbedarf beim Entkoppeln. Wenn es sich bei der Bodenreinigungsmaschine um einen autonom arbeitenden Reinigungsroboter handelt, muss dieser zudem über zusätzliche Sensoren verfügen, die den rückwärtigen Bereich vor und während einer Rückwärtsfahrt auf Hindernisse prüfen können. Das Dokument DE 10 2017 115135 A1 offenbart ein System umfassend eine Bodenreinigungsmaschine und eine Versorgungseinrichtung gemäß dem Oberbegriff von Anspruch 1.

Ausgehend vom Stand der Technik ist es daher die Aufgabe der vorliegenden Erfindung, ein Verfahren zum Betreiben eines Systems umfassend eine Bodenreinigungsmaschine und eine Versorgungseinrichtung bereitzustellen, die auf besonders einfache und sichere Weise gekoppelt und gelöst werden können, ohne dass dafür ein erhöhter Platzbedarf notwendig ist und ohne, dass die Bodenreinigungsmaschine zum Lösen eine Rückwärtsbewegung durchführt.

Gemäß einem ersten Aspekt der Erfindung wird die genannte Aufgabe durch ein Verfahren mit den Merkmalen des Patentanspruchs 1 gelöst. Das Verfahren ist auf das Betreiben eines Systems gerichtet umfassend eine Bodenreinigungsmaschine, bei der es sich beispielsweise um einen autonom arbeitenden Reinigungsroboter, eine handgeführte Bodenreinigungsmaschine oder eine Aufsitzmaschine handeln kann, und eine Versorgungseinrichtung. Die Bodenreinigungsmaschine weist ein Fahrwerk mit wenigstens einem, vorzugsweise von einem Fahrwerksantrieb angetriebenen, Rad auf, wobei das Fahrwerk derart ausgestaltet ist, dass die Bodenreinigungsmaschine über eine Bodenfläche bewegt werden kann. Die Bodenreinigungsmaschine weist wenigstens eine Reinigungseinrichtung auf, die ausgestaltet ist, mit der Bodenfläche einzugreifen. Weiter weist die Bodenreinigungsmaschine einen Frischwasserbehälter zur Aufnahme von Frischwasser, einen Schmutzwasserbehälter zur Aufnahme von Schmutzwasser und/oder eine aufladbare Batterie zur Energieversorgung der Bodenreinigungsmaschine sowie eine erste Kopplungsanordnung auf. Der Frischwasserbehälter, der Schmutzwasserbehälter und/oder die Batterie sind mit der ersten Kopplungsanordnung verbunden. Die Versorgungseinrichtung ist mittels eines mit dieser verbundenen Antriebs auf der Bodenfläche in oder entgegen einer vorzugsweise geradlinigen ersten Verfahrrichtung zwischen einer ersten und einer zweiten Position verfahrbar, wobei die Versorgungseinrichtung durch eine Bewegung in der ersten Verfahrrichtung von der ersten in die zweite Position bewegt wird. Die Versorgungseinrichtung weist eine zweite Kopplungsanordnung auf, die mit der ersten Kopplungsanordnung verbunden werden kann, wobei die erste Verfahrrichtung in die Richtung weist, in die die zweite Kopplungsanordnung bewegt werden muss, um mit der ersten Kopplungsanordnung verbunden zu werden. Die zweite Kopplungsanordnung ist mit einem Frischwassereinlass, einem Schmutzwasserauslass und/oder mit einer Spannungsversorgung verbunden. Die Versorgungseinrichtung und die Bodenreinigungsmaschine sind derart ausgestaltet, dass dann, wenn die erste und die zweite Kopplungsanordnung miteinander verbunden sind, Frischwasser von dem Frischwassereinlass in den Frischwassertank gefördert werden kann und/oder Schmutzwasser aus dem Schmutzwassertank zum Schmutzwasserauslass gefördert werden kann und/oder die Batterie mit der Spannungsversorgung verbunden ist. Alternativ oder in Ergänzung ist es denkbar, dass über die Kopplungsanordnungen ebenfalls weitere Flüssigkeiten, beispielsweise ein Reinigungsmittel, gefördert werden kann.

Das Verfahren umfasst die folgenden Schritte. Betätigen der Versorgungseinrichtung, sodass die Versorgungseinrichtung die zweite Position einnimmt. Bewegen der Bodenreinigungsmaschine entgegen der ersten Verfahrrichtung, vorzugsweise mittels des Fahrwerksantriebs, sodass sich die Bodenreinigungsmaschine so auf die Versorgungsstation zu bewegt, dass während des Bewegens die erste Kopplungsanordnung zu der zweiten Kopplungsanordnung weist. Koppeln der Bodenreinigungsmaschine und der Versorgungseinrichtung durch Verbinden der ersten Kopplungsanordnung mit der zweiten Kopplungsanordnung. Fördern von Frischwasser von dem Frischwassereinlass in den Frischwassertank und/oder Fördern von Schmutzwasser aus dem Schmutzwassertank zum Schmutzwasserauslass und/oder Laden der Batterie mit der Spannungsversorgung. Lösen der Verbindung zwischen der ersten und der zweiten Kopplungsanordnung durch Bewegen der Versorgungseinrichtung entgegen der ersten Verfahrrichtung aus der zweiten Position in die erste Position.

Wie bereits erwähnt weist die Bodenreinigungsmaschine wenigstens eine Reinigungseinrichtung auf, die ausgestaltet ist, mit der Bodenfläche einzugreifen. Die Reinigungseinrichtung kann eine Bürstenanordnung, eine Wischeinrichtung, eine Einrichtung zum Ausbringen von Frischwasser ggf. vermischt mit Reinigungsmitteln und/oder einen Saugfuß aufweisen, mit dem Schmutzwasser von der Bodenfläche aufgenommen werden kann. Die Bürstenanordnung und die Wischeinrichtung sind vorzugsweise angetrieben und greifen so mit der Bodenfläche ein, dass damit Verunreinigungen von der Bodenfläche gelöst und/oder entfernt werden. Mit dem Saugfuß können Verunreinigungen zusammen mit zuvor aufgebrachtem Frischwasser abgesaugt und in den Schmutzwassertank geführt werden. Dies hat den Vorteil, dass Bodenflächen mit besonders starken Verunreinigungen auf besonders einfache Weise gereinigt werden können.

Weiter weist die Bodenreinigungsmaschine einen Frischwasserbehälter zur Aufnahme von Frischwasser, einen Schmutzwasserbehälter zur Aufnahme von Schmutzwasser und/oder eine aufladbare Batterie zur Energieversorgung der Bodenreinigungsmaschine sowie eine erste Kopplungsanordnung auf. Der Frischwassertank und der Schmutzwassertrank sind mit der Reinigungseinrichtung verbunden, sodass das Frischwasser von dem Frischwassertank auf die Bodenfläche und das Schmutzwasser von der Bodenfläche in den Schmutzwassertrank gebracht werden kann. Dabei ist es auch möglich, dass die Bodenreinigungsmaschine alternativ oder in Ergänzung einen Reinigungslösungstank für eine Reinigungslösung aufweist, das mit dem Frischwasser vermischt oder separat auf die zu reinigende Bodenfläche aufgebracht wird. Die Reinigungseinrichtung kann eine Frischwasserzuführeinrichtung und eine Absaugeinrichtung aufweisen. Die aufladbare Batterie dient dazu die Bodenreinigungsmaschine mit elektrischer Energie zu versorgen, sodass die Bodenreinigungsmaschine kabellos operieren kann.

Der Frischwasserbehälter, der Schmutzwasserbehälter und/oder die Batterie und ggf. auch der Reinigungslösungstank sind mit der ersten Kopplungsanordnung verbunden. Über die Kopplungsanordnung kann der Frischwasserbehälter mit Frischwasser befüllt, das Schmutzwasser aus dem Schmutzwassertank entleert und/oder die Batterie der Bodenreinigungsmaschine aufgeladen werden. Die erste Kopplungsanordnung bildet eine Schnittstelle zur Verbindung mit einer Versorgungseinrichtung. Dies hat den Vorteil, dass die Bodenreinigungsmaschine über die Kopplungsanordnung mit einer Versorgungseinrichtung verbunden werden kann. Die erste Kopplungsanordnung weist vorzugsweise einen Stecker und ein Schmutzwasserventil auf, wobei der Stecker eine Schnittstelle zum Zuführen von Frischwasser und eine Schnittstelle zum Zuführen von elektrischer Energie aufweist, mit der die Batterie der Bodenreinigungsmaschine aufgeladen werden kann. Weiter bevorzugt kann der Stecker der ersten Kopplungsanordnung eine Schnittstelle zum Senden und Empfangen von Daten aufweisen, die über einen Datenbus mit einer Steuereinheit der Bodenreinigungsmaschine verbunden ist. Dies hat den Vorteil, dass die Bodenreinigungsmaschine Daten mit der Versorgungseinrichtung oder einer externen Steuereinheit austauschen kann.

Die Versorgungseinrichtung ist mittels eines mit dieser verbundenen Antriebs auf der Bodenfläche in oder entgegen einer vorzugsweise geradlinigen ersten Verfahrrichtung zwischen einer ersten und einer zweiten Position verfahrbar, wobei die Versorgungseinrichtung durch eine Bewegung in der ersten Verfahrrichtung von der ersten in die zweite Position bewegt wird. Die Versorgungseinrichtung kann in einem Gebäude, vorzugsweise an oder vor einer Wand installiert werden, sodass eine Rückwand der Versorgungseinrichtung in Richtung der Wand zeigt. In diesem Fall ist die erste Position eine eingefahrene Position und die zweite Position eine ausgefahrene Position, was heißt, dass eine Vorderseite der Versorgungseinrichtung in der ersten Position näher an der Wand angeordnet ist als in der zweiten Position. Dies hat den Vorteil, dass die Versorgungseinrichtung in der ersten Position einen geringeren Platzbedarf aufweist und in der zweiten Position die Strecke verringert werden kann, die die Bodenreinigungsmaschine zurücklegen muss, um sich mit der Versorgungseinrichtung zu verbinden.

Es ist auch denkbar, dass die Versorgungseinrichtung in einem Raum installiert wird, wobei in diesem Fall der Frischwassereinlass und der Schmutzwasserauslass über Leitungen von der Decke oder dem Boden des Raumes mit der Versorgungseinrichtung verbunden werden. Dies hat den Vorteil, dass keine Wand zur Installation der Versorgungseinrichtung notwendig ist und diese frei positioniert werden kann.

Wie bereits erwähnt ist die Versorgungseinrichtung in oder entgegen einer vorzugsweise geradlinigen Verfahrrichtung verfahrbar. Für den Fall, dass die Versorgungseinrichtung vor einer Wand aufgestellt wird, ist die Verfahrrichtung vorzugsweise senkrecht zur Wand. Geradlinig bedeutet dabei, dass die Versorgungseinrichtung in einem festen Winkel zur Wand verfährt, die Richtung sich also nicht ändert. Dies hat den Vorteil, dass die Versorgungseinrichtung stets gerade auf die Bodenreinigungsmaschine oder gerade von der Bodenreinigungsmaschine weg verfahren kann, sodass eine möglichst genaue und zeiteffiziente Kopplung erfolgen kann.

Die Versorgungseinrichtung weist eine zweite Kopplungsanordnung auf, die mit der ersten Kopplungsanordnung verbunden werden kann, wobei die erste Verfahrrichtung in die Richtung weist, in die die zweite Kopplungsanordnung bewegt werden muss, um mit der ersten Kopplungsanordnung verbunden zu werden. Die zweite Kopplungsanordnung ist komplementär zur ersten Kopplungsanordnung ausgeführt, sodass diese verbunden werden können. Die erste Verfahrrichtung weist in die Richtung, in die die zweite Kopplungsanordnung bewegt werden muss, um mit der ersten Kopplungsanordnung verbunden zu werden. Wenn die Versorgungseinrichtung an oder vor der Wand installiert ist, weist die erste Verfahrrichtung von der Wand weg.

Die zweite Kopplungsanordnung ist mit einem Frischwassereinlass, einem Schmutzwasserauslass und/oder mit einer Spannungsversorgung verbunden. Die Versorgungseinrichtung weist demnach einen Frischwassereinlass, einen Schmutzwasserauslass und eine Spannungsversorgung auf. Der Frischwassereinlass kann mit einer Wasserversorgung beispielsweise des Gebäudes, in dem die Versorgungseinrichtung verwendet wird, beispielsweise über eine Leitung verbunden sein. In ähnlicher Weise kann der Schmutzwasserauslass mit dem Abfluss des Gebäudes verbunden sein. Schließlich kann die Spannungsversorgung an das Versorgungsnetz des Gebäudes angeschlossen sein. Darüber hinaus ist es möglich, dass die Versorgungseinrichtung auch einen Reinigungslösungstank aufweist.

Die zweite Kopplungsanordnung weist vorzugsweise eine zum Stecker komplementäre Buchse und ein zum Schmutzwasserventil komplementäres Schmutzwasserauffangbecken auf. Die Buchse weist eine Schnittstelle zur Bereitstellung von Frischwasser auf, die mit dem Frischwassereinlass verbunden ist. Weiter weist die Buchse eine Schnittstelle zur Bereitstellung elektrischer Energie auf, die mit der Spanungsversorgung verbunden ist. Das Schmutzwasserauffangbecken ist mit dem Schmutzwasserauslass verbunden. Weiterhin weist die Buchse eine Schnittstelle zum Datentransfer auf, die mit einer Steuereinheit der Versorgungseinrichtung verbunden ist und mit der Schnittstelle der ersten Kopplungsanordnung in Verbindung gebracht werden kann. Dadurch wird erreicht, dass die Versorgungseinrichtung Daten mit der Bodenreinigungsmaschine austauschen und auswerten kann. Außerdem kann eine Schnittstelle zur Bereitstellung von Reinigungslösung vorgesehen sein, die mit einem Reinigungslösungstank in der Versorgungseinrichtung verbunden ist.

Es ist im Übrigen auch möglich, dass die Bodenreinigungsmaschine eine Buchse und die Versorgungseinrichtung einen zu der Buchse komplementären Stecker aufweist. Ansonsten gelten die vorherigen Ausführungen zu den Kopplungsanordnungen ganz analog.

Das Verfahren umfasst die folgenden Schritte:
Betätigen der Versorgungseinrichtung, sodass die Versorgungseinrichtung die zweite Position einnimmt. Das Betätigen der Versorgungseinrichtung kann generell durch verschiedene Aktionen eingeleitet werden. Zum einen kann die Versorgungseinrichtung das Betätigen nach einer vorbestimmten Zeitspanne automatisch ausführen. Die Zeitspanne kann beispielswiese ab dem Zeitpunkt starten, ab dem die Versorgungseinrichtung von der Bodenreinigungsmaschine entkoppelt wurde. Dies hat den Vorteil, dass die Bodenreinigungsmaschine nach der vorbestimmten Zeitspanne wieder in die zweite Position verfährt und damit bereit zur Kopplung mit der Bodenreinigungsmaschine ist.

Es ist ebenfalls denkbar, dass das Betätigen der Versorgungseinrichtung durch ein, vorzugsweise drahtloses, Signal der Bodenreinigungsmaschine erfolgt. Dazu kann die Bodenreinigungsmaschine das Signal an die Versorgungseinrichtung senden, sodass diese betätigt wird und in die zweite Position verfährt. Dies hat den Vorteil, dass die Versorgungseinrichtung in der ersten, platzsparenden Position verbleiben kann, bis die Bodenreinigungsmaschine das Signal zum Betätigen sendet, um sich mit der Versorgungseinrichtung zu koppeln.

In einer weiteren Alternative kann das Betätigen durch einen Nutzer erfolgen, beispielsweise indem der Nutzer das Betätigen der Versorgungseinrichtung durch einen Knopfdruck einleitet. Dazu kann die Versorgungseinrichtung einen Betätigungsknopf aufweisen. Diese Variante ist insbesondere vorteilhaft, wenn die Versorgungseinrichtung mit einer handgeführten Bodenreinigungsmaschine oder einer Aufsitzmaschine gekoppelt werden soll, da die Versorgungseinrichtung bis zum Betätigen des Nutzers die erste, platzsparende Position einnehmen kann und damit nur zur Kopplung mit der Bodenreinigungsmaschine in die zweite Position gebracht wird.

Wie bereits erwähnt ist die zweite Position die ausgefahrene Position. Das heißt, dass die Versorgungseinrichtung vorzugsweise vollständig ausgefahren ist und die Bodenreinigungsmaschine zum Verbinden der Kopplungsanordnungen eine geringere Strecke zurücklegen muss. Hier ist es möglich, dass die zweite Position erst dann eingenommen wird, wenn die Bodenreinigungsmaschine bereits zu der Versorgungseinrichtung ausgerichtet ist. In einer anderen Alternative kann die zweite Position bereits unmittelbar, nach einem Lösen der Verbindung zwischen der Bodenreinigungsmaschine und der Versorgungseinrichtung bzw. zwischen deren Kopplungsanordnungen eingenommen werden, wenn sich die Bodenreinigungsmaschine von der Versorgungseinrichtung entfernt hat.

Bewegen der Bodenreinigungsmaschine entgegen der ersten Verfahrrichtung, vorzugsweise mittels des Fahrwerksantriebs, sodass sich die Bodenreinigungsmaschine so auf die Versorgungseinrichtung zu bewegt, dass während des Bewegens die erste Kopplungsanordnung zu der zweiten Kopplungsanordnung weist. Das Bewegen der Bodenreinigungsmaschine ist analog zum Verfahren der Versorgungseinrichtung vorzugsweise eine gradlinige Bewegung. Dann, wenn die Versorgungseinrichtung und die Bodenreinigungsmaschine jeweils eine gradlinige Bewegung ausführen, kann eine effiziente Kopplung erfolgen, da keine Ausweich- oder Korrekturbewegungen ausgeführt werden müssen. Dies hat den Vorteil, dass eine besonders einfache und zeiteffiziente Kopplung erfolgen kann.

Koppeln der Bodenreinigungsmaschine und der Versorgungseinrichtung durch Verbinden der ersten Kopplungsanordnung mit der zweiten Kopplungsanordnung. Unter Koppeln der ersten und zweiten Kopplungsanordnung kann ein in Kontakt Bringen der Kopplungsanordnungen oder ein Erreichen einer gekoppelten Verbindung verstanden werden. Wenn die erste Kopplungsanordnung beispielsweise einen Stecker und die zweite Kopplungsanordnung eine Buchse aufweist, kann unter einem Koppeln verstanden werden, dass der Stecker vollständig in der Buchse aufgenommen wurde. Mit Bezug zum Schmutzwasserventil und zum Schmutzwasserauffangbecken wird unter einer Kopplung verstanden, dass das Schmutzwasserventil so über oder in dem Schmutzwasserauffangbecken der Versorgungseinrichtung angeordnet ist, dass vom Schmutzwasserventil abgelassenes Schmutzwasser vollständig vom Schmutzwasserauffangbecken aufgenommen werden kann. Hierbei kann vorgesehen sein, dass die Versorgungseinrichtung und Bodenreinigungsmaschine über eine Schnittstelle zum Senden und Empfangen von Daten elektronisch durch Übertragen von Testsignalen prüfen, ob die Kopplung korrekt erfolgt ist.

Fördern von Frischwasser von dem Frischwassereinlass in den Frischwassertank und/oder Fördern von Schmutzwasser aus dem Schmutzwassertank zum Schmutzwasserauslass und/oder Laden der Batterie mit der Spannungsversorgung. Das Fördern von Frischwasser, das Fördern von Schmutzwasser und die Spannungsversorgung bzw. das Laden der Batterie können entweder zeitgleich oder nacheinander erfolgen. Es kann auch vorgesehen sein, dass das Fördern von Schmutz- und/oder Frischwasser mehrfach erfolgt. So kann beispielsweise vorgesehen sein, dass zunächst die Batterie mit Spannung versorgt wird, da das Aufladen der Batterie in der Regel am meisten Zeit in Anspruch nimmt. Zeitgleich kann das Schmutzwasser aus dem Schmutzwassertank und Frischwasser in den Frischwassertank gefördert werden. Wenn der Schmutzwassertank vollständig entleert ist, kann vorzugsweise eine Spülung des Schmutzwasserventils durchgeführt werden. Die Spülung kann mit Frischwasser aus dem Frischwassertank erfolgen oder über eine separate Spülleitung in der zweiten Kopplungsanordnung, die mit dem Frischwassereinlass verbunden ist. Dann, wenn die Spülung mit Frischwasser aus dem Frischwassertank erfolgt, kann auf das Spülen des Schmutzwasserventils ein erneutes Fördern von Frischwasser aus dem Frischwassereinlass in den Frischwassertank erfolgen, um diesen vollständig zu befüllen. Die Spülung über Frischwasser aus dem Frischwassertank hat den Vorteil, dass dafür keine separate Spülleitung in der zweiten Kopplungsanordnung benötigt wird. Bei einer separaten Spülleitung, die mit dem Frischwassereinlass verbunden ist, ist besonders vorteilhaft, dass das Spülen unabhängig vom Befüllen des Frischwassertanks erfolgen kann.

Lösen der Verbindung zwischen der ersten und der zweiten Kopplungsanordnung durch Bewegen der Versorgungseinrichtung entgegen der ersten Verfahrrichtung aus der zweiten Position in die erste Position. Unter Lösen der Verbindung zwischen der ersten und zweiten Kopplungsanordnung wird verstanden, dass die Kopplungsanordnungen außer Kontakt gebracht werden, sodass die Bodenreinigungsmaschine und die Versorgungseinrichtung vollständig voneinander getrennt sind. Durch das Bewegen der Versorgungseinrichtung von der zweiten Position in die erste Position wird erreicht, dass die Bodenreinigungsmaschine für den Schritt des Lösens der Verbindung nicht bewegt werden muss. Das bedeutet, dass insbesondere keine Rückwärtsfahrt der Bodenreinigungsmaschine durchgeführt werden muss. Dies hat insbesondere bei autonom arbeitenden Bodenreinigungsmaschinen den Vorteil, dass nicht geprüft muss, ob sich Gegenstände oder Personen hinter der Bodenreinigungsmaschine befinden, wenn diese von der Versorgungseinrichtung gelöst werden soll. Dadurch kann ein besonders einfaches und sicheres Lösen der Bodenreinigungsmaschine von der Versorgungseinrichtung erreicht werden.

Mit dem Verfahren ist es generell möglich, dass unterschiedliche Arten von Bodenreinigungsmaschinen mit der Versorgungseinrichtung gekoppelt werden können. Insbesondere umfasst dies autonom arbeitende Bodenreinigungsmaschinen, die den Verfahrensschritt des Bewegens der Bodenreinigungsmaschine entgegen der ersten Verfahrrichtung vollständig autonom ausführen. Dazu wird die autonom arbeitende Bodenreinigungsmaschine über einen Fahrwerksantrieb entgegen der ersten Verfahrrichtung bewegt. Das Verfahren umfasst auch handgeführte Bodenreinigungsmaschinen und Aufsitzmaschinen, die von einem Nutzer bewegt und oder gesteuert werden. In diesem Fall wird der Verfahrensschritt des Bewegens der Bodenreinigungsmaschine entgegen der ersten Verfahrrichtung von dem Nutzer durch Schieben oder Steuern der Bodenreinigungsmaschine durchgeführt.

In einer Ausführungsform erfolgt nach dem Lösen der Verbindung eine seitliche Schwenkbewegung der Bodenreinigungsmaschine um eine vertikale Achse, bei der die erste Kopplungsanordnung gegenüber der zweiten Kopplungsanordnung seitlich verschwenkt wird. Nach dem Lösen durch Bewegen der Versorgungseinrichtung entgegen der ersten Verfahrrichtung aus der zweiten Position in die erste Position sind die erste und zweite Kopplungsanordnung voneinander getrennt, und die Bodenreinigungsmaschine kann sich von der Versorgungseinrichtung entfernen. Wie bereits erwähnt ist es durch die Bewegbarkeit der Versorgungseinrichtung nicht notwendig, dass die Bodenreinigungsmaschine zurückfährt, um sich von der Versorgungseinrichtung zu lösen. Vielmehr ist durch das vorliegende Verfahren möglich, dass die Bodenreinigungsmaschine eine seitliche Schwenkbewegung durchführt. Dadurch ist es möglich, dass die Bodenreinigungsmaschine seitlich zur Versorgungseinrichtung verfahren oder verschwenken kann, sodass die Versorgungseinrichtung und die Bodenreinigungsmaschine einen geringeren Platzbedarf beim Koppeln und Entkoppeln aufweisen.

In einer bevorzugten Ausführungsform beträgt der Schwenkwinkel der seitlichen Schwenkbewegung mehr als 90°, vorzugsweise 180°. Durch einen Schwenkwinkel von 180° ist es möglich, dass die Bodenreinigungsmaschine in Richtung der ersten Verfahrrichtung der Versorgungseinrichtung verfährt, ohne dass dafür eine Rückwärtsfahrt notwendig ist. Dies hat den Vorteil, dass nach dem Lösen nicht geprüft werden muss, ob sich Gegenstände oder Personen hinter der Bodenreinigungsmaschine befinden. Vielmehr kann die Bodenreinigungsmaschine nach der Schwenkung um 180° regulär vorwährts fahren.

In einer bevorzugten Ausführungsform wird vor dem Schritt des Bewegens der Bodenreinigungsmaschine entgegen der ersten Verfahrrichtung die Bodenreinigungsmaschine vor der Versorgungseinrichtung so positioniert, dass die erste Kopplungsanordnung so zu der zweiten Kopplungsanordnung ausgerichtet ist, dass sie durch eine geradlinige Bewegung aufeinander zu verbunden werden können. Dieser Schritt entspricht einer Positionierung der Bodenreinigungsmaschine vor der Versorgungseinrichtung. Die Bodenreinigungsmaschine wird so vor der Versorgungseinrichtung positioniert, dass sich die erste und zweite Kopplungsanordnungen gegenüberliegen. Dabei kann die Bodenreinigungsmaschine frontal auf die Versorgungseinrichtung zufahren oder seitlich heranfahren und eine Schwenkbewegung ausführen, bis die erste und zweite Kopplungsanordnungen sich gegenüberliegen. Dies hat den Vorteil, dass auch beim Koppeln ein geringerer Platzbedarf notwendig ist.

In einer weiteren bevorzugten Ausführungsform erfolgt nach dem Positionieren eine ausschließlich geradlinige Bewegung der Bodenreinigungsmaschine entgegen der ersten Verfahrrichtung. Dadurch wird erreicht, dass die Bodenreinigungsmaschine unabhängig von der zuvor durchgeführten Positionierung mit der Versorgungseinrichtung gekoppelt werden kann.

In einer weiteren bevorzugten Ausführungsform wird die Bewegung entgegen der ersten Verfahrrichtung für ein Zeitintervall unterbrochen. Durch die Unterbrechung wird erreicht, dass die Bodenreinigungsmaschine prüfen kann, ob sich Gegenstände oder Personen in der Umgebung der Bodenreinigungsmaschine und insbesondere zwischen der Bodenreinigungsmaschine und der Versorgungseinrichtung befinden, die den Koppelvorgang stören könnten. Die Unterbrechung kann auch dazu verwendet werden, den Kopplungsvorgang vorzubereiten, indem beispielsweise Daten von der Bodenreinigungsmaschine gesammelt oder ausgewertet werden. Dadurch kann ein sicherer und zeiteffizienter Kopplungsvorgang erreicht werden.

In weiter bevorzugter Weise wird die Bewegung entgegen der ersten Verfahrrichtung nach der Unterbrechung mit gegenüber der Geschwindigkeit vor der Unterbrechung verminderter Geschwindigkeit ausgeführt. Durch die verminderte Geschwindigkeit wird eine präzise Kopplung ermöglicht.

In einer weiteren bevorzugten Ausführungsform weist die Bodenreinigungsmaschine eine Erfassungseinheit zur Erfassung von Gegenständen im Bereich der ersten Kopplungsanordnung auf, wobei während des Bewegens der Bodenreinigungsmaschine entgegen der ersten Verfahrrichtung mit der Erfassungseinheit geprüft wird, ob Gegenstände zwischen Bodenreinigungsmaschine und Versorgungseinrichtung vorhanden sind. Wenn die Erfassungseinheit einen Gegenstand in der Nähe der Versorgungseinrichtung erfasst, wird das Bewegen der Bodenreinigungsmaschine entgegen der ersten Verfahrrichtung gestoppt. Durch die Prüfung, ob Gegenstände zwischen der Bodenreinigungsmaschine und der Versorgungseinrichtung vorhanden sind, kann verhindert werden, dass der Kopplungsvorgang unterbrochen oder gestört wird, wodurch eine zuverlässige Kopplung ermöglicht wird.

In einer weiteren bevorzugten Ausführungsform weist die erste Kopplungsanordnung ein Schmutzwasserventil auf, das mit dem Schmutzwassertank verbunden ist, wobei das Schmutzwasserventil eine geschlossene Stellung und eine geöffnete Stellung hat und durch Betätigen eines Betätigungselements von der geschlossenen Stellung in die geöffnete Stellung überführt werden kann. Wenn das Schmutzwasserventil in der geöffneten Stellung ist und die erste Kopplungsanordnung mit zweiten Kopplungsanordnung verbunden ist, kann Schmutzwasser aus dem Schmutzwassertank zu dem Schmutzwasserauslass gefördert werden. Die Versorgungseinrichtung weist einen Betätiger auf, der mit dem Betätigungselement eingreifen kann, wenn die erste und die zweite Kopplungsanordnung verbunden sind, wobei zum Fördern von Schmutzwasser aus dem Schmutzwassertank zum Schmutzwasserauslass der Betätiger mit dem Betätigungselement eingreift und das Schmutzwasserventil in die geöffnete Stellung überführt. Der Betätiger der Versorgungseinrichtung kann einen Hubzylinder aufweisen, der eine erste Stellung und eine zweite Stellung einnehmen kann. In der ersten Stellung ist der Hubzylinder eingefahren, sodass das Schmutzwasserventil in der geschlossenen Stellung verbleibt, wenn die erste und zweite Kopplungsanordnung verbunden sind. In der zweiten Stellung drückt der Betätiger gegen das Betätigungselement des Schmutzwasserventils, sodass das Schmutzwasserventil von der geschlossenen in die geöffnete Stellung gebracht werden kann, wenn die erste und zweite Kopplungsanordnung verbunden sind. Dadurch wird erreicht, dass das Schmutzwasser kontrolliert abgelassen werden kann, indem der Betätiger von der ersten in die zweite Stellung gebracht wird. Es ist ebenfalls denkbar, dass der Betätiger neben der ersten und zweiten Stellung noch weitere Stellungen einnehmen kann. So kann der Betätiger beispielsweise auch eine oder mehrere Zwischenstellungen einnehmen. Dies hat den Vorteil, dass der Betätiger das Schmutzwasserventil in eine Stellung bringen kann, in der das Schmutzwasserventil nicht vollständig geöffnet ist. Dies hat den Vorteil, dass der Betätiger über die Zwischenstellungen eine Durchflussmenge am Schmutzwasserventil einstellen kann, indem der Betätiger das Schmutzwasserventil in eine Zwischenstellung verbringt, in der das Schmutzwasserventil nicht vollständig geöffnet ist.

In einer weiteren bevorzugten Ausführungsform erfolgt nach dem Fördern des Schmutzwassers aus dem Schmutzwassertank zu dem Schmutzwasserauslass ein Zuführen von Frischwasser von der Versorgungseinrichtung zu dem Schmutzwasserventil, während das Schmutzwasserventil in der geöffneten Stellung ist, um das Schmutzwasserventil zu spülen. Zum Zuführen von Frischwasser zu dem Schmutzwasserventil kann das Schmutzwasserventil eine Zuleitung vom Frischwassertank der Bodenreinigungsmaschine aufweisen, sodass das Frischwasser von der Versorgungseinrichtung zum Frischwassertank und über die Zuleitung zum Schmutzwasserventil geführt wird. Es ist aber auch möglich, dass das Frischwasser zum Spülen des Schmutzwasserventils von der Versorgungseinrichtung über die Kopplungsanordnungen zugeführt wird. Bei dieser Ausführungsform wird erreicht, dass das Schmutzwasserventil mit Frischwasser gespült werden kann, sodass verhindert wird, dass Schmutzablagerungen am Ventil verbleiben, die die Dichtigkeit des Schmutzwasserventils beeinträchtigen können.

In einer bevorzugten Ausführungsform wird der Pegel in dem Schmutzwassertank erfasst und das Zuführen von Frischwasser, vorzugsweise von der Versorgungseinrichtung, zu dem Schmutzwasserventil, um das Schmutzwasserventil zu spülen, erfolgt dann, wenn der Pegel in dem Schmutzwassertank unter einen Minimalpegel gefallen ist. Durch die Erfassung des Pegels in dem Schmutzwassertank kann erkannt werden, wann der Schmutzwassertank leer ist, sodass dann das Schmutzwasserventil gespült werden kann, da dann kein Schmutzwasser mehr im Schmutzwassertank ist und durch das Schmutzwasserventil fließt.

In einer Ausführungsform wird während des Förderns von Frischwasser von dem Frischwassereinlass in den Frischwassertank in der Versorgungseinrichtung die Menge des geförderten Frischwassers erfasst, wobei während des Förderns von Frischwasser von dem Frischwassereinlass in den Frischwassertank der Pegel des Frischwassers im Frischwassertank der Bodenreinigungsmaschine erfasst wird und wobei das Fördern von Frischwasser gestoppt wird, wenn die Zunahme des Pegels im Frischwassertank nicht der erfassten Menge des geförderten Frischwassers entspricht. Durch die Erkennung der Menge an abgegebenem Frischwasser und der Erfassung des Pegels kann festgestellt werden, ob das abgegebene Frischwasser in den Frischwassertank gefördert wird oder ob Frischwasser austritt, sodass die Abgabe an Frischwasser unterbrochen wird, um zu verhindern, dass eine größere Menge an Frischwasser austritt. Die Bodenreinigungsmaschine kann der Versorgungseinrichtung über die Datenschnittstelle den Pegel des Frischwassertanks und das Volumen des Frischwassertanks senden, sodass die Versorgungseinrichtung, vorzugsweise mit einer Durchflussmessung, errechnen kann, ob die Menge an abgegebenem Frischwasser dem übersendeten Pegel im Frischwassertank entspricht. Es ist auch denkbar, dass die abgegebene Menge mittels eines Wassermengenzählers erfasst wird.

In einer Ausführungsform wird während des Förderns von Frischwasser von dem Frischwassereinlass in den Frischwassertank in der Versorgungseinrichtung der Pegel des Frischwassers im Frischwassertank der Bodenreinigungsmaschine erfasst und das Fördern von Frischwasser gestoppt, wenn der Pegel in dem Frischwassertank einen Maximalpegel erreicht hat. Durch die Erfassung des Maximalpegels wird verhindert, dass zu viel Frischwasser in den Frischwassertank der Bodenreinigungsmaschine gefördert wird. Der Maximalpegel kann in Form eines Werts an die Versorgungseinrichtung übersendet werden. Alternativ kann die Bodenreinigungsmaschine einen Stopp-Befehl an die Versorgungseinrichtung senden, sodass das Zuführen von Frischwasser gestoppt werden kann.

Gemäß einem zweiten Aspekt der Erfindung wird die genannte Aufgabe durch ein System mit den Merkmalen des Patentanspruchs 14 gelöst. Das System umfasst eine Bodenreinigungsmaschine und eine Versorgungseinrichtung und ist ausgestaltet, das erfindungsgemäße zuvor beschriebene Verfahren auszuführen.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.

Nachfolgend wird die vorliegende Erfindung anhand einer lediglich ein bevorzugtes Ausführungsbeispiel zeigenden Zeichnung erläutert, in der
- Figuren 1a und 1b: schematische Ansichten eines Ausführungsbeispiels einer Bodenreinigungsmaschine zeigen,
- Figuren 2a bis 3b: schematische Ansichten eines Ausführungsbeispiels einer Versorgungseinrichtung zeigen,
- Figuren 4 bis 6d: schematische Ansichten eines Ausführungsbeispiels eines erfindungsgemäßen Systems mit einer in den Figuren 1a und 1b dargestellten Bodenreinigungsmaschine und einer in den Figuren 2a bis 3b dargestellten Versorgungseinrichtung zeigen und
- Figur 7: eine schematische Darstellung einer Ausführungsform eines erfindungsgemäßen Verfahrens zeigt.

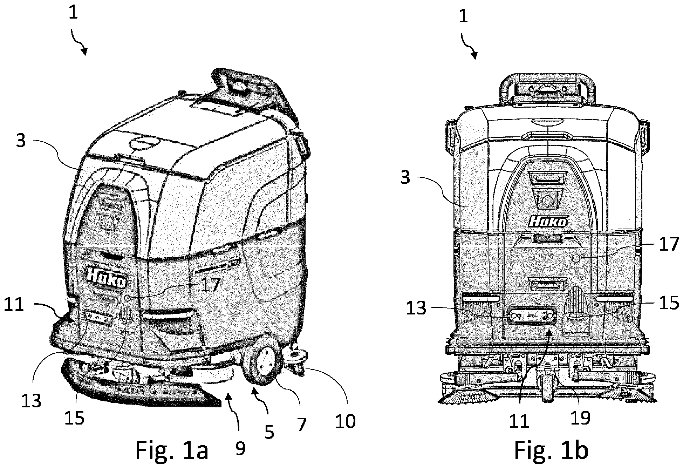

Die Figuren 1a und 1b zeigen eine schematische Ansicht eines Ausführungsbeispiels einer Bodenreinigungsmaschine 1, wobei Figur 1a eine schematische Perspektivansicht des Ausführungsbeispiels der Bodenreinigungsmaschine 1 und Figur 1b eine schematische Frontansicht des Ausführungsbeispiels der Bodenreinigungsmaschine 1 zeigt.

Wie aus Figur 1a und 1b hervorgeht, weist die Bodenreinigungsmaschine 1 ein erstes Gehäuse 3 und ein Fahrwerk 5 auf, das mindestens ein, vorzugsweise von einem Fahrwerksantrieb angetriebenes, Rad 7 aufweist. Mit dem Fahrwerk 5 kann die Bodenreinigungsmaschine über eine Bodenfläche bewegt werden. Insbesondere kann es sich bei der Bodenreinigungsmaschine 1 um einen autonom arbeitenden Reinigungsroboter handeln. Weiter weist die Bodenreinigungsmaschine 1 eine Reinigungseinrichtung 9, einen Frischwassertank und einen Schmutzwassertank auf. In dem vorliegenden Ausführungsbeispiel weist die Reinigungseinrichtung 9 eine Bürstenanordnung, eine Einrichtung zum Ausbringen von Frischwasser ggf. vermischt mit Reinigungsmitteln und einen Saugfuß 10 auf, mit dem Schmutzwasser von der Bodenfläche aufgenommen werden kann. In einer alternativen Ausführungsform kann die Reinigungseinrichtung eine Wischeinrichtung aufweisen. Die Bürstenanordnung ist angetrieben und greift so mit der Bodenfläche ein, dass damit Verunreinigungen von der Bodenfläche gelöst und/oder entfernt werden. Mit dem Saugfuß 10 werden Verunreinigungen zusammen mit zuvor aufgebrachtem Frischwasser abgesaugt und in den Schmutzwassertank geführt. Dies ermöglicht, dass Bodenflächen mit besonders starken Verunreinigungen auf besonders einfache Weise gereinigt werden können.

Die Bodenreinigungsmaschine 1 weist eine erste Kopplungsanordnung 11 auf. Die erste Kopplungsanordnung 11 weist eine Buchse 13 und ein Schmutzwasserventil 15 auf. Das Schmutzwasserventil 15 ist mit dem Schmutzwassertank verbunden. Die Buchse 13 weist eine Schnittstelle zum Zuführen von Frischwasser in den Frischwassertank, eine Schnittstelle zum Zuführen von Frischwasser in eine Spülleitung zum Spülen des Schmutzwasserventils 15 und eine Schnittstelle zum Zuführen von elektrischer Energie auf, mit der eine Batterie der Bodenreinigungsmaschine 1 aufgeladen werden kann. Es ist generell denkbar, dass die erste Kopplungsanordnung ebenfalls eine Schnittstelle zum Zuführen von weiteren Flüssigkeiten aufweist, beispielsweise einer Reinigungslösung, die in einen Tank zur Aufnahme der Reinigungslösung in der Bodenreinigungsmaschine 1 gefördert werden kann. Weiter weist die Buchse 13 der ersten Kopplungsanordnung 11 eine Schnittstelle zum Senden und Empfangen von Daten auf, die über einen Datenbus mit einer Steuereinheit der Bodenreinigungsmaschine 1 verbunden ist. Dies ermöglicht, dass die Bodenreinigungsmaschine 1 Daten mit einer Versorgungseinrichtung oder einer externen Steuereinheit austauschen kann.

Weiterhin weist die Bodenreinigungsmaschine 1 ein Betätigungselement 17 auf, das mit dem Schmutzwasserventil 15 verbunden ist. Das Schmutzwasserventil 15 hat eine geschlossene Stellung und eine geöffnete Stellung und kann durch Betätigen des Betätigungselements 17 von der geschlossenen Stellung in die geöffnete Stellung überführt werden. In der geschlossenen Stellung wird ein Austreten des Schmutzwassers aus dem Schmutzwassertank verhindert. Wenn das Schmutzwasserventil 15 in der geöffneten Stellung ist, kann Schmutzwasser über das Schmutzwasserventil 15 aus dem Schmutzwassertank gefördert werden. Dadurch wird erreicht, dass das Schmutzwasser kontrolliert abgelassen werden kann, indem das Schmutzwasserventil 15 über das Betätigungselement 17 von der geschlossenen in die geöffnete Stellung gebracht wird.

Die Bodenreinigungsmaschine 1 weist ein Einfädelblech 19 auf, das mit einer komplementär ausgeformten Einfädeleinrichtung einer Versorgungseinrichtung eingreift und die Bodenreinigungsmaschine 1 so gegenüber der Versorgungseinrichtung ausrichtet. Dazu weist das Einfädelblech 19 einen distalen Abschnitt auf, der mit einer Aussparung einer Versorgungseinrichtung eingreifen kann. Das Einfädelblech 19 weist am distalen Ende einen geringeren Querschnitt auf, sodass das Einfädelblech 19 leichter an der Versorgungseinrichtung eingefädelt werden kann.

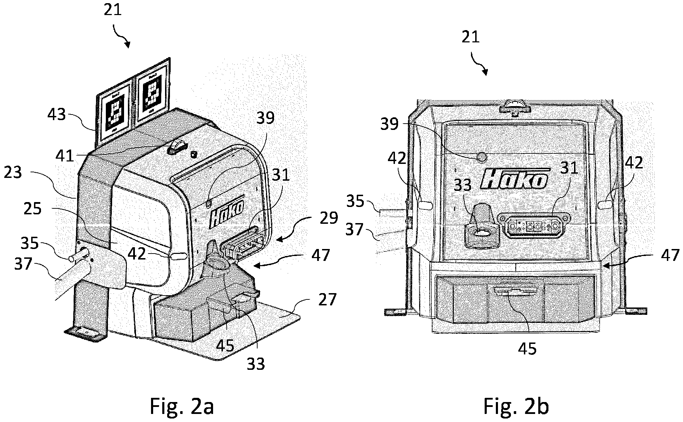

Die Figuren 2a bis 3b zeigen eine schematische Ansicht eines Ausführungsbeispiels einer Versorgungseinrichtung 21, wobei Figur 2a eine schematische Perspektivansicht des Ausführungsbeispiels der Versorgungseinrichtung 21 und Figur 2b eine schematische Frontansicht des Ausführungsbeispiels der Versorgungseinrichtung 21 zeigt.

Wie aus Figur 2a und 2b hervorgeht, kann die Versorgungseinrichtung 21 in ein Rahmenelement 23 eingeschoben werden, indem eine Rückseite der Versorgungseinrichtung 21 dort hinein bewegt wird. Das Rahmenelement 23 kann fest auf einer Bodenfläche oder an einer Wand angebracht werden. Außerdem weist die Versorgungseinrichtung 21 ein zweites Gehäuse 25 auf. Außerdem kann eine Bodenplatte 27 vorgesehen sein, auf der sich die Versorgungseinrichtung 21 bewegt.

Die Versorgungseinrichtung 21 weist zudem einen Antrieb auf, mittels dessen die Versorgungseinrichtung 21 auf der Bodenplatte 27 bzw. einer Bodenfläche, auf der die Versorgungseinrichtung 21 platziert ist, verfahren werden kann. Die Versorgungseinrichtung 21 ist mittels des Antriebs auf der Bodenfläche in oder entgegen einer vorzugsweise geradlinigen ersten Verfahrrichtung zwischen einer ersten und einer zweiten Position verfahrbar, wobei die Versorgungseinrichtung 21 durch eine Bewegung in der ersten Verfahrrichtung von der ersten in die zweite Position bewegt wird. Die Versorgungseinrichtung 21 kann in einem Gebäude, vorzugsweise an oder vor einer Wand installiert werden, sodass die Rückwand des Rahmenelements 23 an der Wand befestigt sein kann. In diesem Fall ist die erste Position eine eingefahrene Position und die zweite Position eine ausgefahrene Position, was heißt, dass eine Vorderseite der Versorgungseinrichtung 21 in der ersten Position näher an der Wand angeordnet ist als in der zweiten Position. Dies hat den Vorteil, dass die Versorgungseinrichtung 21 in der ersten Position einen geringeren Platzbedarf aufweist und in der zweiten Position die Strecke verringert werden kann, die die Bodenreinigungsmaschine 1 zurücklegen muss, um sich mit der Versorgungseinrichtung 21 zu verbinden.

Weiterhin weist die Versorgungseinrichtung 21 eine zweite Kopplungsanordnung 29 auf, die einen zur Buchse 13 komplementären Stecker 31 und ein zum Schmutzwasserventil 15 komplementäres Schmutzwasserauffangbecken 33 aufweist. In der vorliegenden Ausführungsform sind der Stecker 31 und das Schmutzwasserauffangbecken 33 voneinander getrennt, das heißt, dass sie in einem Abstand zueinander angeordnet sind. In einer alternativen Ausführungsform können der Stecker 31 und das Schmutzwasserauffangbecken 33 integral, das heißt in einem Bauteil angeordnet sein. Dies hat den Vorteil, dass die zweite Kopplungsanordnung 29 einen geringeren Platzbedarf aufweist.

Die zweite Kopplungsanordnung 29 ist mit einem Frischwassereinlass 35, einem Schmutzwasserauslass 37 und mit einer Spannungsversorgung verbunden. Es ist ebenfalls möglich, dass die zweite Kopplungsanordnung 29 mit einem Behälter mit Reinigungslösung verbunden ist und der Stecker 31 eine Schnittstelle zur Bereitstellung der Reinigungslösung aufweist. Der Stecker 31 weist eine Schnittstelle zur Bereitstellung von Frischwasser auf, die mit dem Frischwassereinlass 35 verbunden ist. Weiter weist der Stecker 31 eine Schnittstelle zur Bereitstellung elektrischer Energie auf, die mit der Spanungsversorgung verbunden ist. Das Schmutzwasserauffangbecken 33 ist mit dem Schmutzwasserauslass 37 verbunden. Weiterhin weist der Stecker 31 eine Schnittstelle zum Datentransfer auf, die mit einer Steuereinheit der Versorgungseinrichtung 21 verbunden ist und mit der Schnittstelle der ersten Kopplungsanordnung 11 in Verbindung gebracht werden kann. Dadurch wird erreicht, dass die Versorgungseinrichtung 21 Daten mit der Bodenreinigungsmaschine 1 austauschen und auswerten kann.

Die Versorgungseinrichtung 21 weist einen Betätiger 39 auf, der mit dem Betätigungselement 17 eingreifen kann, wenn die erste und die zweite Kopplungsanordnung 11, 29 verbunden sind, wobei zum Fördern von Schmutzwasser aus dem Schmutzwassertank zum Schmutzwasserauslass 37 der Betätiger 39 mit dem Betätigungselement 17 eingreift und das Schmutzwasserventil 15 in die geöffnete Stellung überführt. Der Betätiger 39 der Versorgungseinrichtung 21 ist als Hubzylinder ausgeführt, der eine erste Stellung und eine zweite Stellung einnehmen kann. In der ersten Stellung ist der Hubzylinder eingefahren, sodass das Schmutzwasserventil 15 in der geschlossenen Stellung verbleibt, wenn die erste und zweite Kopplungsanordnung 11, 29 verbunden sind. In der zweiten Stellung drückt der Betätiger 39 gegen das Betätigungselement 17 des Schmutzwasserventils 15, sodass das Schmutzwasserventil 15 von der geschlossenen in die geöffnete Stellung gebracht werden kann, wenn die erste und zweite Kopplungsanordnung 11, 29 verbunden sind.

Die Versorgungseinrichtung 21 weist eine Leuchteinheit 41 auf. Die Leuchteinheit 41 dient dazu, ein visuelles Warnsignal auszugeben, wenn die Versorgungseinrichtung 21 bewegt wird. Vorzugsweise blinkt die Leuchteinheit 41**,** wenn die Versorgungseinrichtung 21 von der ersten Position in die zweite Position und von der zweiten Position in die erste Position bewegt wird. Durch das von der Leuchteinheit 41 ausgehende Warnsignal können Personen davor gewarnt werden, dass die Versorgungseinrichtung 21 bewegt wird.

Des Weiteren weist die Versorgungseinrichtung 21 eine LED-Anordnung mit mindestens einer LED-Leuchte 42 auf. In dem vorliegenden Ausführungsbeispiel sind zwei LED-Leuchten 42, zu jeder Seite der Versorgungseinrichtung 21 eine, angeordnet. Die LED-Leuchten 42 sind geeignet, in einer Vielzahl an Farben zu leuchten, sodass die LED-Leuchte 42 durch Leuchten in einer bestimmten Farbe einen Status anzeigen kann. So kann beispielsweise vorgesehen sein, dass die LED-Leuchte 42 in einer ersten Farbe, beispielsweise blau, leuchtet, um anzuzeigen, dass sich das System sich in einem autonom agierenden Zustand befindet. Unter dem autonom agierenden Zustand wird verstanden, dass die Versorgungseinrichtung 21 autonom agiert, das heißt, dass sie sich selbst betätigt, heißt ein- und ausfährt. Dieser Zustand ist vor allem vorteilhaft, wenn die Versorgungseinrichtung 21 mit einer autonom agierenden Bodenreinigungsmaschine 1 verwendet wird. Im Gegensatz dazu kann die LED-Leuchte 42 in einer zweiten Farbe, beispielsweise grün, leuchten, um anzuzeigen, dass die Versorgungseinrichtung 21 sich in einem manuellen agierenden Zustand befindet. Unter einem manuell agierenden Zustand wird verstanden, dass die Versorgungseinrichtung 21 nicht selbstständig aus- und einfährt, sondern erst ausfährt, wenn ein Nutzer die Versorgungseinrichtung 21 betätigt hat. Dieser Zustand ist vor allem vorteilhaft, wenn die Versorgungseinrichtung 21 mit einer manuell betriebenen Bodenreinigungsmaschine 1 verwendet wird. Weiterhin kann die LED-Leuchte 42 in einer dritten Farbe, beispielsweise rot, leuchten, um anzuzeigen, dass ein Fehler vorliegt. Bei dem Fehler kann es sich um einen Fehler der Versorgungseinrichtung 21 oder einen Fehler beim Koppeln mit der Bodenreinigungsmaschine 1 handeln.

Es ist auch denkbar, dass die LED-Leuchte 42 in einer vierten Farbe leuchtet, um anzuzeigen, dass sie Daten mit der Bodenreinigungsmaschine 1 austauscht, vorzugsweise dann, wenn sie mit der Bodenreinigungsmaschine 1 gekoppelt ist. Dieser Austausch von Daten kann ein Senden von Daten aufweisen, beispielsweise, wenn die Versorgungseinrichtung 21 Daten an die Bodenreinigungsmaschine 1 sendet. Solche Daten können beispielsweise Fehlerdaten, Betriebsdaten oder sonstige Informationen über die Versorgungseinrichtung 21 umfassen. Der Austausch von Daten kann auch ein Empfangen von Daten aufweisen, beispielsweise dann, wenn die Versorgungseinrichtung 21 Daten von der Bodenreinigungsmaschine 1 empfängt. Solche Daten können beispielsweise Informationen über die Bodenreinigungsmaschine 1 oder Aktualisierungen der Software der Versorgungseinrichtung 21 umfassen. In der Regel weist die Bodenreinigungsmaschine 1 eine Schnittstelle zur Kommunikation, beispielsweise mit einem Server, auf. Durch den Austausch von Informationen mit der Versorgungseinrichtung 21 ist es nicht notwendig, dass diese ebenfalls eine Schnittstelle zur Kommunikation aufweist, sondern über die Bodenreinigungsmaschine 1, beispielsweise mit dem Server, kommuniziert. So ist es möglich, dass die Bodenreinigungsmaschine 1 beispielsweise ein Fehlerprotokoll von der Versorgungseinrichtung 21 erhält und dieses an den Server sendet oder Aktualisierungsdaten vom Server für die Versorgungseinrichtung 21 erhält und an diese weitergibt. Dadurch wird eine besonders einfache Wartung der Versorgungseinrichtung 21 erreicht.

Weiter weist die Versorgungseinrichtung 21 ein Identifikationstag 43 auf. Das Identifikationstag 43 kann von der Bodenreinigungsmaschine 1 gelesen werden. Durch das Identifikationstag 43 kann die Bodenreinigungsmaschine 1 die Versorgungseinrichtung 21 verifizieren und prüfen, ob die Versorgungseinrichtung 21 mit der Bodenreinigungsmaschine 1 kompatibel ist.

Die Versorgungseinrichtung 21 weist eine Einfädelungseinheit 45 auf, die mit dem Einfädelblech 19 der Bodenreinigungsmaschine 1 eingreifen kann, um die Versorgungseinrichtung 21 gegenüber der Bodenreinigungsmaschine 1 auszurichten. Dazu weist die Einfädelungseinheit 45 eine Aussparung auf, die vorzugsweise eine konische Form aufweist, das heißt, dass die Aussparung sich in Richtung weg von der Versorgungseinrichtung 21 aufweitet. Durch die Einfädelungseinheit 45 wird auf besonders einfache Weise eine korrekte Ausrichtung der der Versorgungseinrichtung 21 gegenüber Bodenreinigungsmaschine 1 erreicht, sodass die Versorgungseinrichtung 21 stets korrekt gegenüber der Bodenreinigungsmaschine 1 ausgerichtet ist. Dadurch lässt sich eine besonders zuverlässige Kopplung der Bodenreinigungsmaschine 1 mit der Versorgungseinrichtung 21 erreichen.

Über der Einfädelungseinheit 45 weist die Versorgungseinrichtung 21 eine Aussparung 47 auf, die dazu dient, dass die Bodenreinigungsmaschine 1 vollständig an die Versorgungseinrichtung 21 heranfahren kann. Zum einen kann die Bodenreinigungsmaschine 1 Abschnitte aufweisen, die hervorstehen und in die Aussparung 47 aufgenommen werden können, wenn die Bodenreinigungsmaschine 1 zur Kopplung an die Versorgungseinrichtung 21 heranfährt. Zum anderen kann durch die Aussparung 47 erreicht werden, dass eine Erkennungseinrichtung der Bodenreinigungsmaschine 1 mit einem Erkennungsfeld, das vorzugsweise in einer Ebene mit der Aussparung 47 liegt, die Versorgungseinrichtung 21 nicht als Hindernis erkennt und somit verhindert, dass die Bodenreinigungsmaschine 1 zur Kopplung mit der Versorgungseinrichtung 21 nahe genug an diese heranfährt. Wenn die Bodenreinigungsmaschine 1 beispielsweise ein Laser-Schutzfeld aufweist, dann dient die Aussparung 47 dazu, das Laser-Schutzfeld aufzunehmen, damit die Bodenreinigungsmaschine 1 mit der Versorgungseinrichtung 21 gekoppelt werden kann, ohne dass das Laser-Schutzfeld die Versorgungseinrichtung 21 als ein Hindernis erkennt. Dies hat den Vorteil, dass die Bodenreinigungsmaschine 1 die Erkennungseinrichtung selbst dann nicht abschalten muss, wenn sie sich mit der Versorgungseinrichtung 21 koppelt. Außerdem kann die Bodenreinigungsmaschine 1 die Erkennungseinrichtung zur Vorbereitung der Entkopplung von der Versorgungseinrichtung 21 starten, wenn die Bodenreinigungsmaschine 1 noch mit der Versorgungseinrichtung 21 gekoppelt ist.

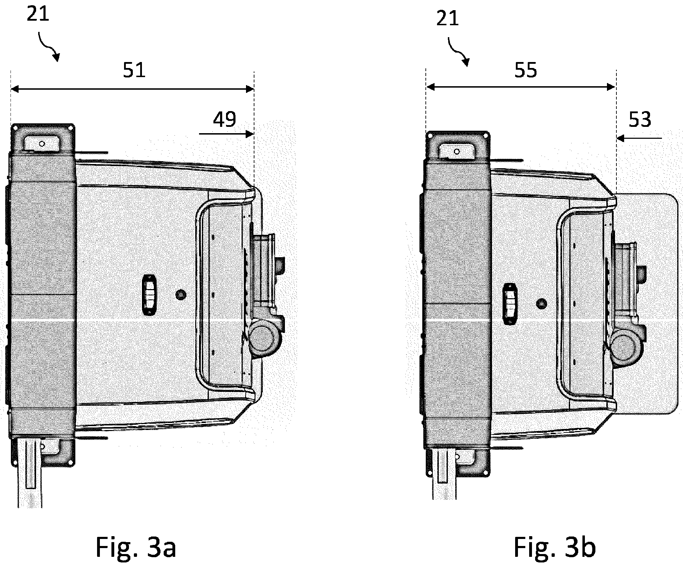

Figur 3a und 3b zeigen eine schematische Draufsicht des Ausführungsbeispiels der Versorgungseinrichtung 21, wobei Figur 3a die Versorgungseinrichtung 21 in der zweiten Position und Figur 3b die Versorgungseinrichtung 21 in der ersten Position zeigt. Wie bereits erwähnt ist die zweite Position die ausgefahrene Position, das heißt, dass die Versorgungseinrichtung 21 durch eine Bewegung in einer ersten Verfahrrichtung 49 bewegt wurde. In der zweiten Position weist eine Vorderseite der Versorgungseinrichtung 21 einen ersten Abstand 51 zur Rückseite des Rahmenelements 23 auf. In der ersten, eingefahrenen Position, das heißt, dass die Versorgungseinrichtung 21 durch eine Bewegung in einer der ersten Verfahrrichtung 49 entgegengesetzten zweiten Verfahrrichtung 53 bewegt wurde. In der ersten Position weist die Vorderseite der Versorgungseinrichtung 21 einen zweiten Abstand 55 zur Rückseite des Rahmenelements 23 auf. Der erste Abstand 51 ist dabei größer als der zweite Abstand 55, sodass die Versorgungseinrichtung 21 in der ersten Position einen geringeren Platzbedarf aufweist und in der zweiten Position die Strecke verringert, die die Bodenreinigungsmaschine 1 zurücklegen muss, um sich mit der Versorgungseinrichtung 21 zu verbinden.

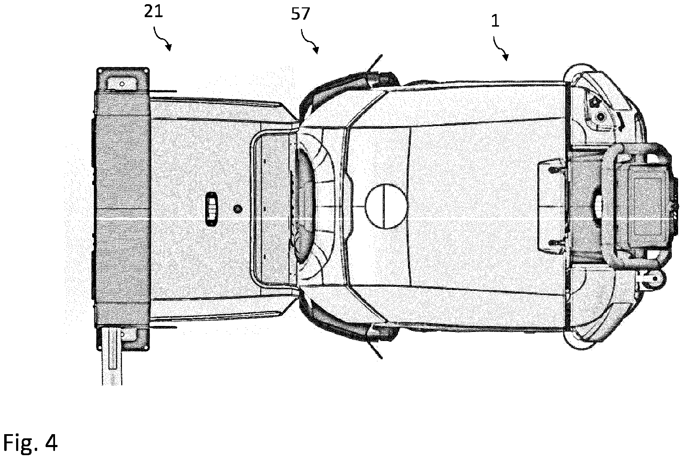

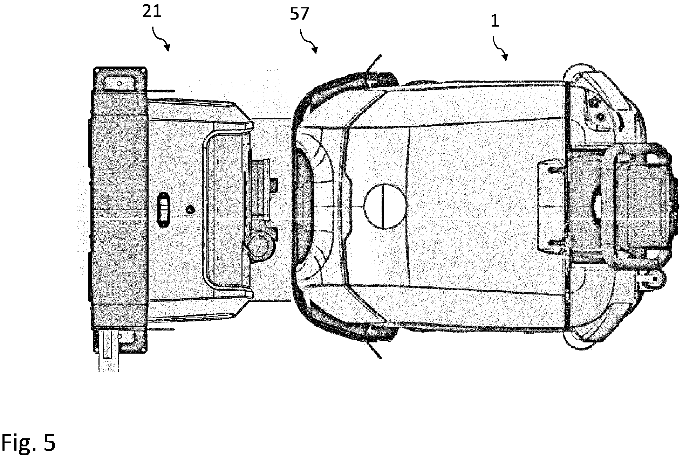

Die Figuren 4 bis 6d zeigen schematische Ansichten eines Ausführungsbeispiels eines erfindungsgemäßen Systems 57 mit einer in den Figuren 1a und 1b dargestellten Bodenreinigungsmaschine 1 und einer in den Figuren 2a bis 3b dargestellten Versorgungseinrichtung 21, wobei Figur 4 das System 57 in einem entkoppelten Zustand und Figur 5 das System 57 in einem gekoppelten Zustand zeigt.

Figur 4 zeigt das System 57 umfassend die Bodenreinigungsmaschine 1 und die Versorgungseinrichtung 21 in einem gekoppelten Zustand, das heißt, dass sich die Versorgungseinrichtung 21 in der zweiten, ausgefahrenen Position befindet und die Bodenreinigungsmaschine 1 mit der Versorgungseinrichtung 21 so gekoppelt ist, dass die erste Kopplungsanordnung 11 und die zweite Kopplungsanordnung 29 miteinander verbunden sind.

Figur 5 zeigt das System 57 umfassend die Bodenreinigungsmaschine 1 und die Versorgungseinrichtung 21 in einem entkoppelten Zustand, das heißt, dass sich die Versorgungseinrichtung 21 in der ersten, eingefahrenen Position befindet und die Bodenreinigungsmaschine 1 mit der Versorgungseinrichtung 21 so entkoppelt ist, dass die erste Kopplungsanordnung 11 und die zweite Kopplungsanordnung 29 voneinander gelöst und beabstandet sind.

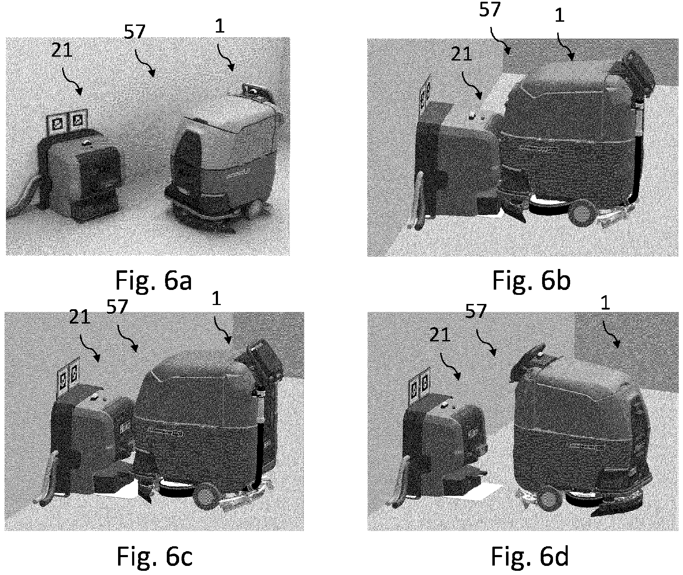

Die Figuren 6a bis 6d zeigen das System 57 in vier verschiedenen Zuständen. In Figur 6a sind die Bodenreinigungsmaschine 1 und die Versorgungseinrichtung 21 gezeigt, wobei die Bodenreinigungsmaschine 1 und die Versorgungseinrichtung 21 nicht zueinander positioniert sind, um sich miteinander zu koppeln. Dieser Zustand entspricht beispielsweise einem Zustand, in dem die Bodenreinigungsmaschine 1 einen Reinigungsauftrag ausführt und die Versorgungseinrichtung 21 in einem Wartezustand ist. Im Wartezustand wartet die Versorgungseinrichtung 21 darauf, dass die Bodenreinigungsmaschine 1 sich mit der Versorgungseinrichtung 21 koppelt. Die Versorgungseinrichtung 21 befindet sich im Wartezustand in der zweiten, ausgefahrenen Position. Dies hat zum einen den Vorteil, dass nicht geprüft werden muss, ob die Versorgungseinrichtung 21 ausgefahren und damit bereit zum Koppeln ist und zum anderen muss die Versorgungseinrichtung 21 nicht ausgefahren werden, wenn die Bodenreinigungsmaschine 1 an diese heranfährt, um sich mit ihr zu koppeln.

In Figur 6b ist das System 57 in einem gekoppelten Zustand, wie in Figur 4, gezeigt. Die Versorgungseinrichtung 21 befindet sich immer noch in der zweiten Position und die Bodenreinigungsmaschine 1 ist so an die Versorgungseinrichtung 21 herangefahren, dass die erste und zweite Kopplungsanordnung 11, 29 miteinander verbunden sind. Im gekoppelten Zustand können die Bodenreinigungsmaschine 1 und die Versorgungseinrichtung 21 zum einen das Frisch- und das Schmutzwasser austauschen bzw. zuführen und ablassen und zum anderen kann die Batterie der Bodenreinigungsmaschine 1 aufgeladen werden. Des Weiteren können die Bodenreinigungsmaschine 1 und die Versorgungseinrichtung 21 über die Datenschnittstelle Informationen in Form von Daten austauschen.

In Figur 6c ist das System 57 in einem entkoppelten Zustand, wie in Figur 5, gezeigt. Die Versorgungseinrichtung 21 wurde dazu in die erste Position bewegt, sodass diese nun eingefahren ist. Die Bodenreinigungsmaschine 1 wurde zum Lösen der Verbindung nicht bewegt. Im entkoppelten Zustand kann die Bodenreinigungsmaschine 1 sich nun, beispielsweise in Form einer Schwenkbewegung, von der Versorgungseinrichtung 21 entfernen. Wie bereits zuvor erwähnt kann die Bodenreinigungsmaschine 1 die Erkennungseinrichtung bereits starten, bevor die Versorgungseinrichtung 21 in die erste Position bewegt wurde. Dies hat den Vorteil, dass die Bodenreinigungsmaschine 1 unmittelbar nachdem die Versorgungseinrichtung 21 von der Bodenreinigungsmaschine 1 entkoppelt wurde, verschwenken kann und Hindernisse beim Verschwenken unmittelbar erkannt werden.

In Figur 6d ist das System 57 in einem entkoppelten Zustand gezeigt, wobei die Bodenreinigungsmaschine 1 eine Schwenkbewegung um 180° durchgeführt hat, um sich von der Versorgungseinrichtung 21 zu entfernen. Die Versorgungseinrichtung 21 befindet sich in der ersten Position und ist damit eingefahren. Nach der Entkopplung kann die Bodenreinigungsmaschine 1 einen Reinigungsauftrag ausführen und die Versorgungseinrichtung 21 kann in die zweite Position verfahren und die Warteposition einnehmen, sodass erneut der Zustand aus Figur 6a eingenommen wird.

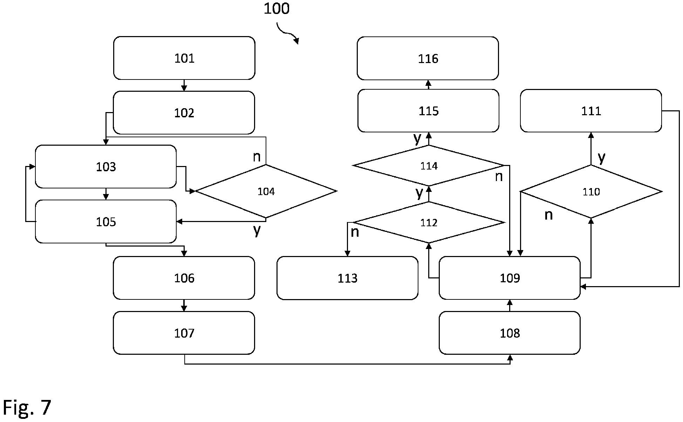

Figur 7 zeigt eine schematische Darstellung einer Ausführungsform eines erfindungsgemäßen Verfahrens 100. Das Verfahren 100 ist auf das Betreiben des Systems 57 umfassend die Bodenreinigungsmaschine 1 und die Versorgungseinrichtung 21 gerichtet.

In einem ersten Schritt 101 weist das Verfahren 100 ein Betätigen der Versorgungseinrichtung 21 auf, sodass die Versorgungseinrichtung 21 die zweite Position einnimmt. Wie bereits erwähnt ist die zweite Position die ausgefahrene Position. Das heißt, dass die Versorgungseinrichtung 21 vorzugsweise vollständig ausgefahren ist und die Bodenreinigungsmaschine 1 zum Verbinden der Kopplungsanordnungen 11, 29 eine geringere Strecke zurücklegen muss. Hier ist es möglich, dass die zweite Position erst dann eingenommen wird, wenn die Bodenreinigungsmaschine 1 bereits zu der Versorgungseinrichtung 21 ausgerichtet ist. In einer anderen Alternative kann die zweite Position bereits unmittelbar oder verzögert nach Ablauf einer vorgegebenen Zeitspanne, nach einem vorherigen Lösen der Verbindung zwischen der Bodenreinigungsmaschine 1 und der Versorgungseinrichtung 21 bzw. zwischen deren Kopplungsanordnungen 11, 29 eingenommen werden, wenn sich die Bodenreinigungsmaschine 1 von der Versorgungseinrichtung 21 entfernt hat, wie in Figur 6d gezeigt. Es ist ebenfalls denkbar, dass das Betätigen der Versorgungseinrichtung 21 durch ein, vorzugsweise drahtloses, Signal der Bodenreinigungsmaschine 1 erfolgt. Schließlich kann das Betätigen durch einen Nutzer erfolgen, beispielsweise indem der Nutzer das Betätigen der Versorgungseinrichtung 21 durch einen Knopfdruck einleitet. Dazu kann die Versorgungseinrichtung 21 einen Betätigungsknopf aufweisen. Diese Variante ist insbesondere vorteilhaft, wenn die Versorgungseinrichtung 21 mit einer handgeführten Bodenreinigungsmaschine 1 oder einer Aufsitzmaschine gekoppelt werden soll

In der hier beschriebenen bevorzugten Ausführungsform weist das Verfahren 100 in einem zweiten Schritt 102 ein Positionieren der Bodenreinigungsmaschine 1 vor der Versorgungseinrichtung 21 so auf, dass die erste Kopplungsanordnung 11 so zu der zweiten Kopplungsanordnung 29 ausgerichtet ist, dass sie durch eine geradlinige Bewegung aufeinander verbunden werden können. Dieser Schritt entspricht einer Positionierung der Bodenreinigungsmaschine 1 vor der Versorgungseinrichtung 21. Die Bodenreinigungsmaschine 1 wird so vor der Versorgungseinrichtung 21 positioniert, dass sich die erste und zweite Kopplungsanordnungen 11, 29 gegenüberliegen. Dabei kann die Bodenreinigungsmaschine 1 frontal auf die Versorgungseinrichtung 21 zufahren oder seitlich heranfahren und eine Schwenkbewegung ausführen, bis die erste und zweite Kopplungsanordnungen 11, 29 sich gegenüberliegen. Dies hat den Vorteil, dass auch beim Koppeln ein geringerer Platzbedarf notwendig ist.

In einem dritten Schritt 103 weist das Verfahren 100 ein Bewegen der Bodenreinigungsmaschine 1 entgegen der ersten Verfahrrichtung 49 mittels des Fahrwerksantriebs auf, sodass sich die Bodenreinigungsmaschine 1 so auf die Versorgungseinrichtung 21 zu bewegt, dass während des Bewegens die erste Kopplungsanordnung 11 zu der zweiten Kopplungsanordnung 29 weist. Das Bewegen der Bodenreinigungsmaschine 1 ist analog zum Verfahren der Versorgungseinrichtung 21 vorzugsweise eine gradlinige Bewegung. Dann, wenn die Versorgungseinrichtung 21 und die Bodenreinigungsmaschine 1 jeweils eine gradlinige Bewegung ausführen, kann eine effiziente Kopplung erfolgen, da keine Ausweich- oder Korrekturbewegungen ausgeführt werden müssen. Dies hat den Vorteil, dass eine besonders einfache und zeiteffiziente Kopplung erfolgen kann.

In der hier beschriebenen bevorzugten Ausführungsform weist das Verfahren 100 in einem vierten Schritt 104 ein Erfassen von Gegenständen im Bereich der zweiten Kopplungsanordnung 11, d.h. zwischen der Bodenreinigungsmaschine 1 und der Versorgungseinrichtung 21, mit einer Erfassungseinheit auf, wobei während des Bewegens der Bodenreinigungsmaschine 1 entgegen der ersten Verfahrrichtung 49 im dritten Schritt 103 mit der Erfassungseinheit im vierten Schritt 104 geprüft wird, ob Gegenstände zwischen Bodenreinigungsmaschine 1 und Versorgungseinrichtung 21 vorhanden sind. Wenn die Erfassungseinheit einen Gegenstand in der Nähe der Versorgungseinrichtung 21 erfasst (Pfad y), wird das Bewegen der Bodenreinigungsmaschine 1 entgegen der ersten Verfahrrichtung 49 gestoppt. Wenn die Erfassungseinheit keinen Gegenstand, was auch eine Person umfasst, in der Nähe der Versorgungseinrichtung 21 erfasst (Pfad n) wird die Bodenreinigungsmaschine 1 weiterhin bewegt. Durch die Prüfung, ob Gegenstände zwischen der Bodenreinigungsmaschine 1 und der Versorgungseinrichtung 21 vorhanden sind, kann verhindert werden, dass der Kopplungsvorgang unterbrochen oder gestört wird, wodurch eine zuverlässige Kopplung ermöglicht wird.

Der dritte Schritt 103 und der vierte Schritt 104 können in einer bevorzugten Ausführungsform parallel durchgeführt werden, indem die Bodenreinigungsmaschine 1 immer dann, wenn sie in Bewegung ist, prüft, ob sich Gegenstände zwischen der Bodenreinigungsmaschine 1 und der Versorgungseinrichtung 21 befinden. In einer weiter bevorzugten Ausführungsform kann der vierte Schritt 104 auch parallel zum zweiten und dritten Schritt 102, 103 durchgeführt werden. Dies hat den Vorteil, dass die Bodenreinigungsmaschine 1 auch während dem Positionieren prüft, ob sich Gegenstände zwischen der Bodenreinigungsmaschine 1 und der Versorgungseinrichtung 21 befinden. Dadurch kann erreicht werden, dass auch der zweite Schritt des Positionierens zuverlässig durchgeführt werden kann.

In der hier beschriebenen bevorzugten Ausführungsform weist das Verfahren 100 in einem fünften Schritt 105 ein Stoppen bzw. Unterbrechen der Bewegung entgegen der ersten Verfahrrichtung 49 für ein Zeitintervall auf. Durch die Unterbrechung wird erreicht, dass die Bodenreinigungsmaschine 1 prüfen kann, ob sich Gegenstände oder Personen in der Umgebung der Bodenreinigungsmaschine 1 und insbesondere zwischen der Bodenreinigungsmaschine 1 und der Versorgungseinrichtung 21 befinden, die den Koppelvorgang stören könnten. Die Unterbrechung kann auch dazu verwendet werden, den Kopplungsvorgang vorzubereiten, indem beispielsweise Daten von der Bodenreinigungsmaschine 1 gesammelt oder ausgewertet werden. Dadurch kann ein sicherer und zeiteffizienter Kopplungsvorgang erreicht werden.

Der fünfte Schritt 105 kann entweder als Folge der Prüfung im vierten Schritt 104 durchgeführt werden, nämlich dann, wenn sich Gegenstände zwischen der Bodenreinigungsmaschine 1 und der Versorgungseinrichtung 21 befinden oder bei Erreichen eines vorbestimmten Abstands zwischen der Bodenreinigungsmaschine 1 und der Versorgungseinrichtung 21. Damit wird erreicht, dass die Bodenreinigungsmaschine 1 nicht nur gestoppt wird, wenn sich Gegenstände zwischen der Bodenreinigungsmaschine 1 und der Versorgungseinrichtung 21 befinden, sondern auch, wenn der vorbestimmte Abstand erreicht wird. Dies hat den Vorteil, dass die Bodenreinigungsmaschine 1 vor dem Koppeln mit der Versorgungseinrichtung 21 zum Stehen kommt und den Kopplungsvorgang vorbereiten kann, sodass ein sicherer und zeiteffizienter Kopplungsvorgang erreicht wird.

Dann wenn im fünften Schritt 105 die Unterbrechung der Bewegung in Folge der Erkennung eines Gegenstands erfolgt ist, kann das Verfahren 100 im dritten Schritt 103 weitergehen, sodass die Bodenreinigungsmaschine 1 weiter auf die Versorgungseinrichtung 21 zubewegt wird, bis eine bestimmte Bedingung erfüllt ist, beispielsweise der vorbestimmte Abstand erreicht wird. Dies hat den Vorteil, dass die Bodenreinigungsmaschine 1 nach einer Unterbrechung durch einen erkannten Gegenstand an der Stelle weitergeführt werden kann, an der die Unterbrechung erfolgte. Dadurch wird erreicht, dass das Verfahren 100 bei Erkennung eines Gegenstands nicht neu beginnen muss.

In der hier beschriebenen bevorzugten Ausführungsform weist das Verfahren 100 in einem sechsten Schritt 106 ein Bewegen der Bodenreinigungsmaschine 1 entgegen der ersten Verfahrrichtung 49 mit gegenüber der Geschwindigkeit vor der Unterbrechung verminderter Geschwindigkeit auf. Das heißt, dass die Bodenreinigungsmaschine 1 im sechsten Schritt 106 mit geringerer Geschwindigkeit auf die Versorgungseinrichtung 21 zubewegt wird als im dritten Schritt 103. Durch die verminderte Geschwindigkeit wird eine präzise Kopplung ermöglicht.

In einem siebten Schritt 107 weist das Verfahren 100 ein Koppeln der Bodenreinigungsmaschine 1 und der Versorgungseinrichtung 21 durch Verbinden der ersten Kopplungsanordnung 11 mit der zweiten Kopplungsanordnung 29 auf, wie in Figur 6b gezeigt. Unter Koppeln der ersten und zweiten Kopplungsanordnung 11, 29 kann ein in Kontakt Bringen der Kopplungsanordnungen 11, 29 oder ein Erreichen einer gekoppelten Verbindung verstanden werden. Wenn die erste Kopplungsanordnung 11 beispielsweise eine Buchse 13 und die zweite Kopplungsanordnung einen Stecker 31 aufweist, kann unter einem Koppeln verstanden werden, dass der Stecker 31 vollständig in der Buchse 13 aufgenommen wurde. Mit Bezug zum Schmutzwasserventil 15 und zum Schmutzwasserauffangbecken 33 wird unter einer Kopplung verstanden, dass das Schmutzwasserventil 15 so über oder in dem Schmutzwasserauffangbecken 33 der Versorgungseinrichtung 21 angeordnet ist, dass vom Schmutzwasserventil 15 abgelassenes Schmutzwasser vollständig vom Schmutzwasserauffangbecken 33 aufgenommen werden kann. Im siebten Schritt 107 kann ebenfalls vorgesehen sein, dass eine elektronische Prüfung erfolgt, die ergibt, ob die Versorgungseinrichtung 21 erfolgreich mit der Bodenreinigungsmaschine 1 gekoppelt ist.

In der hier beschriebenen bevorzugten Ausführungsform weist das Verfahren 100 in einem achten Schritt 108 ein Betätigen des Betätigungselements 17 auf, wobei dadurch das Schmutzwasserventil 15 von der geschlossenen Stellung in die geöffnete Stellung überführt wird. Wenn das Schmutzwasserventil 15 in der geöffneten Stellung ist und die erste Kopplungsanordnung 11 mit zweiten Kopplungsanordnung 29 verbunden ist, kann Schmutzwasser aus dem Schmutzwassertank zu dem Schmutzwasserauslass 37 gefördert werden. Die Versorgungseinrichtung 21 weist den Betätiger 39 auf, der mit dem Betätigungselement 17 eingreifen kann, wenn die erste und die zweite Kopplungsanordnung 11, 29 verbunden sind, wobei zum Fördern von Schmutzwasser aus dem Schmutzwassertank zum Schmutzwasserauslass 37 der Betätiger 39 mit dem Betätigungselement 17 eingreift und das Schmutzwasserventil 15 in die geöffnete Stellung überführt.

In einem neunten Schritt 109 weist das Verfahren 100 ein Fördern von Frischwasser von dem Frischwassereinlass 35 in den Frischwassertank und/oder ein Fördern von Schmutzwasser aus dem Schmutzwassertank zum Schmutzwasserauslass 37 und/oder ein Laden der Batterie mit der Spannungsversorgung auf. Alternativ oder ergänzend ist es möglich, dass im neunten Schritt 109 ebenfalls weitere Flüssigkeiten, beispielsweise eine Reinigungslösung, gefördert werden. Das Fördern von Frischwasser, das Fördern von Schmutzwasser und die Spannungsversorgung bzw. das Laden der Batterie können entweder zeitgleich oder nacheinander erfolgen. Es kann auch vorgesehen sein, dass das Fördern von Schmutz- und/oder Frischwasser mehrfach erfolgt. So kann beispielsweise vorgesehen sein, dass zunächst die Batterie mit Spannung versorgt wird, da das Aufladen der Batterie in der Regel am meisten Zeit in Anspruch nimmt. Zeitgleich kann das Schmutzwasser aus dem Schmutzwassertank und Frischwasser in den Frischwassertank gefördert werden. Wenn der Schmutzwassertank vollständig entleert ist, kann vorzugsweise eine Spülung des Schmutzwasserventils 15 durchgeführt werden. Auf das Spülen des Schmutzwasserventils 15 kann dann ein erneutes Fördern von Frischwasser aus dem Frischwassereinlass 35 in den Frischwassertank erfolgen, um diesen vollständig zu befüllen, wenn das Schmutzwasserventil 15 mit Frischwasser aus dem Frischwassertank gespült wurde. Ein erneutes Fördern von Frischwasser aus dem Frischwassereinlass 35 ist nicht erforderlich, wenn das Schmutzwasserventil 15 mit Frischwasser aus dem Frischwassereinlass 35 gespült wurde.

In der hier beschriebenen bevorzugten Ausführungsform weist das Verfahren 100 in einem zehnten Schritt 110 ein Erfassen eines Pegels in dem Schmutzwassertank auf, wobei das Zuführen von Frischwasser von der Versorgungseinrichtung 21 zu dem Schmutzwasserventil 15, um das Schmutzwasserventil 15 zu spülen, dann erfolgt, wenn der Pegel in dem Schmutzwassertank unter einen Minimalpegel gefallen ist. Durch die Erfassung des Pegels in dem Schmutzwassertank kann erkannt werden, wann der Schmutzwassertank leer ist, sodass dann das Schmutzwasserventil 15 gespült werden kann, da dann kein Schmutzwasser mehr im Schmutzwassertank ist und durch das Schmutzwasserventil 15 fließt.

In der hier beschriebenen bevorzugten Ausführungsform weist das Verfahren 100 in einem elften Schritt 111 ein Spülen des Schmutzwasserventils 15 durch Zuführen von Frischwasser von der Versorgungseinrichtung 21 zu dem Schmutzwasserventil 15 auf, während das Schmutzwasserventil 15 in der geöffneten Stellung ist. Zum Zuführen von Frischwasser zu dem Schmutzwasserventil 15 weist das Schmutzwasserventil 15 eine Zuleitung von der ersten Kopplungsanordnung 11 auf, sodass Frischwasser von der Versorgungseinrichtung 21 über die Zuleitung zum Schmutzwasserventil 15 geführt wird. Bei dieser Ausführungsform wird erreicht, dass das Schmutzwasserventil 15 mit Frischwasser gespült werden kann, sodass verhindert wird, dass Schmutzablagerungen am Ventil verbleiben, die die Dichtigkeit des Schmutzwasserventils 15 beeinträchtigen können. Auf den elften Schritt 111 kann wieder der neunte Schritt 109 folgen, um den Frischwassertank aufzufüllen. Dies ist dann der Fall, wenn das Frischwasser zum Spülen des Schmutzwasserventils 15 von dem Frischwassertank gefördert wird. Dazu kann die Zuleitung zum Schmutzwasserventil 15 mit dem Frischwassertank verbunden sein.

In der hier beschriebenen bevorzugten Ausführungsform umfasst das Verfahren 100 in einem zwölften Schritt 112 ein Erfassen der Menge des geförderten Frischwassers, wobei während des Förderns von Frischwasser von dem Frischwassereinlass in den Frischwassertank im neunten Schritt 109 in der Versorgungseinrichtung 21 die Menge des geförderten Frischwassers erfasst wird und der Pegel des Frischwassers im Frischwassertank der Bodenreinigungsmaschine 1 erfasst wird, wobei das Fördern von Frischwasser gestoppt wird, wenn die Zunahme des Pegels im Frischwassertank nicht der erfassten Menge des geförderten Frischwassers entspricht. Durch die Erkennung der Menge an abgegebenem Frischwasser und der Erfassung des Pegels kann festgestellt werden, ob das abgegebene Frischwasser in den Frischwassertank gefördert wird oder ob Frischwasser austritt, sodass die Abgabe an Frischwasser unterbrochen wird, um zu verhindern, dass eine größere Menge an Frischwasser austritt. Die Bodenreinigungsmaschine 1 kann der Versorgungseinrichtung 21 über die Datenschnittstelle den Pegel des Frischwassertanks und das Volumen des Frischwassertanks senden, sodass die Versorgungseinrichtung 21 errechnen kann, ob die Menge an abgegebenem Frischwasser dem übersendeten Pegel im Frischwassertank entspricht.

Wenn im zwölften Schritt 112 erkannt wird, dass die Zunahme des Pegels im Frischwassertank nicht der erfassten Menge des geförderten Frischwassers entspricht (Pfad n) wird das Zuführen von Frischwasser in einem dreizehnten Schritt 113 gestoppt. Der dreizehnte Schritt 113 weist eine Ausgabe und Meldung eines Fehlers auf, sodass geprüft werden kann, ob und wo das Frischwasser austritt. Wenn im zwölften Schritt 112 erkannt wird, dass die Zunahme des Pegels im Frischwassertank mit der erfassten Menge des geförderten Frischwassers übereinstimmt (Pfad y) fährt das Verfahren 100 im nächsten Schritt fort.

In der hier beschriebenen bevorzugten Ausführungsform weist das Verfahren 100 in einem vierzehnten Schritt 114 ein Erfassen in der Versorgungseinrichtung 21 des Pegels des Frischwassers im Frischwassertank, wobei das Fördern von Frischwasser gestoppt wird, wenn der Pegel in dem Frischwassertank einen Maximalpegel erreicht hat. Durch die Erfassung des Maximalpegels wird verhindert, dass zu viel Frischwasser in den Frischwassertank der Bodenreinigungsmaschine 1 gefördert wird. Der Maximalpegel kann in Form eines Werts an die Versorgungseinrichtung 21 übersendet werden. Alternativ kann die Bodenreinigungsmaschine 1 einen Stopp-Befehl an die Versorgungseinrichtung 21 senden, sodass das zuführen von Frischwasser gestoppt werden kann.

In einem fünfzehnten Schritt 115 weist das Verfahren 100 ein Lösen der Verbindung zwischen der ersten und der zweiten Kopplungsanordnung 11, 29 durch Bewegen der Versorgungseinrichtung 21 entgegen der ersten Verfahrrichtung 49 aus der zweiten Position in die erste Position. Unter Lösen der Verbindung zwischen der ersten und zweiten Kopplungsanordnung 11, 29 wird verstanden, dass die Kopplungsanordnungen 11, 29 außer Kontakt gebracht werden, sodass die Bodenreinigungsmaschine 1 und die Versorgungseinrichtung 21 vollständig voneinander getrennt sind. Durch das Bewegen der Versorgungseinrichtung 21 von der zweiten Position in die erste Position wird erreicht, dass die Bodenreinigungsmaschine 1 für den Schritt des Lösens der Verbindung nicht bewegt werden muss. Das bedeutet, dass insbesondere keine Rückwärtsfahrt der Bodenreinigungsmaschine 1 durchgeführt werden muss. Dies hat den Vorteil, dass nicht geprüft werden muss, ob sich Gegenstände oder Personen hinter der Bodenreinigungsmaschine 1 befinden, wenn diese von der Versorgungseinrichtung 21 gelöst werden soll. Dadurch kann ein besonders einfaches und sicheres Lösen der Bodenreinigungsmaschine 1 von der Versorgungseinrichtung 21 erreicht werden.

In der hier beschriebenen bevorzugten Ausführungsform weist das Verfahren 100 in einem sechszehnten Schritt 116 ein Verschwenken der Bodenreinigungsmaschine 1 durch eine seitliche Schwenkbewegung der Bodenreinigungsmaschine 1 um eine vertikale Achse, bei der die erste Kopplungsanordnung 11 gegenüber der zweiten Kopplungsanordnung 29 seitlich verschwenkt wird. Nach dem Lösen durch Bewegen der Versorgungseinrichtung 21 entgegen der ersten Verfahrrichtung 49 aus der zweiten Position in die erste Position im fünfzehnten Schritt 115 sind die erste und zweite Kopplungsanordnung 11, 29 voneinander getrennt, und die Bodenreinigungsmaschine 1 kann sich von der Versorgungseinrichtung 21 entfernen. Wie bereits erwähnt ist es durch die Bewegbarkeit der Versorgungseinrichtung 21 nicht notwendig, dass die Bodenreinigungsmaschine 1 zurückfährt, um sich von der Versorgungseinrichtung 21 zu lösen. Vielmehr ist durch das vorliegende Verfahren 100 möglich, dass die Bodenreinigungsmaschine 1 eine seitliche Schwenkbewegung durchführt. Dadurch ist es möglich, dass die Bodenreinigungsmaschine 1 seitlich zur Versorgungseinrichtung 21 verfahren oder verschwenken kann, sodass die Versorgungseinrichtung 21 und die Bodenreinigungsmaschine 1 einen geringeren Platzbedarf beim Koppeln und Entkoppeln aufweisen.

Der Schwenkwinkel der seitlichen Schwenkbewegung beträgt bevorzugt mehr als 90°, vorzugsweise 180°. Durch einen Schwenkwinkel von 180° ist es möglich, dass die Bodenreinigungsmaschine 1 in Richtung der ersten Verfahrrichtung 49 der Versorgungseinrichtung 21 verfährt, ohne dass dafür eine Rückwärtsfahrt notwendig ist. Dies hat den Vorteil, dass nach dem Lösen nicht geprüft werden muss, ob sich Gegenstände oder Personen hinter der Bodenreinigungsmaschine 1 befinden. Vielmehr kann die Bodenreinigungsmaschine 1 nach der Schwenkung um 180° regulär vorwährts fahren.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste:

- 1: Bodenreinigungsmaschine
- 3: erstes Gehäuse
- 5: Fahrwerk
- 7: Rad
- 9: Reinigungseinrichtung
- 10: Saugfuß
- 11: erste Kopplungsanordnung
- 13: Buchse
- 15: Schmutzwasserventil
- 17: Betätigungselement
- 19: Einfädelblech
- 21: Versorgungseinrichtung
- 23: Rahmenelement
- 25: zweites Gehäuse
- 27: Bodenplatte
- 29: zweite Kopplungsanordnung
- 31: Stecker
- 33: Schmutzwasserauffangbecken
- 35: Frischwassereinlass
- 37: Schmutzwasserauslass
- 39: Betätiger
- 41: Leuchteinheit
- 42: LED-Leuchten
- 43: Identifikationstag
- 45: Einfädelungseinheit
- 47: Aussparung
- 49: erste Verfahrrichtung
- 51: erster Abstand
- 53: zweite Verfahrrichtung
- 55: zweiter Abstand
- 57: System

- 100: Verfahren
- 101: erster Schritt
- 102: zweiter Schritt
- 103: dritter Schritt
- 104: vierter Schritt
- 105: fünfter Schritt
- 106: sechster Schritt
- 107: siebter Schritt
- 108: achter Schritt
- 109: neunter Schritt
- 110: zehnter Schritt
- 111: elfter Schritt
- 112: zwölfter Schritt
- 113: dreizehnter Schritt
- 114: vierzehnter Schritt
- 115: fünfzehnter Schritt
- 116: sechszehnter Schritt

## Patentansprüche

1. Verfahren (100) zum Betreiben eines Systems (57) umfassend eine Bodenreinigungsmaschine (1) und eine Versorgungseinrichtung (21),
wobei die Bodenreinigungsmaschine (1) ein Fahrwerk (5) mit wenigstens einem, vorzugsweise von einem Fahrwerksantrieb angetriebenen, Rad (7) aufweist, wobei das Fahrwerk (5) derart ausgestaltet ist, dass die Bodenreinigungsmaschine (1) über eine Bodenfläche bewegt werden kann,
wobei die Bodenreinigungsmaschine (1) wenigstens eine Reinigungseinrichtung (9) aufweist, die ausgestaltet ist, mit der Bodenfläche einzugreifen,
wobei die Bodenreinigungsmaschine (1) einen Frischwasserbehälter zur Aufnahme von Frischwasser, einen Schmutzwasserbehälter zur Aufnahme von Schmutzwasser und/oder eine aufladbare Batterie zur Energieversorgung der Bodenreinigungsmaschine (1) sowie eine erste Kopplungsanordnung (11) aufweist,
wobei der Frischwasserbehälter, der Schmutzwasserbehälter und/oder die Batterie mit der ersten Kopplungsanordnung (11) verbunden sind;
wobei die Versorgungseinrichtung (21) mittels eines mit dieser verbundenen Antriebs auf der Bodenfläche in oder entgegen einer vorzugsweise geradlinigen ersten Verfahrrichtung (49) zwischen einer ersten und einer zweiten Position verfahrbar ist,
wobei die Versorgungseinrichtung (21) durch eine Bewegung in der ersten Verfahrrichtung (49) von der ersten in die zweite Position bewegt wird,
wobei die Versorgungseinrichtung (21) eine zweite Kopplungsanordnung (29) aufweist, die mit der ersten Kopplungsanordnung (11) verbunden werden kann und wobei die erste Verfahrrichtung (49) in die Richtung weist, in die die zweite Kopplungsanordnung (29) bewegt werden muss, um mit der ersten Kopplungsanordnung (11) verbunden zu werden,
wobei die zweite Kopplungsanordnung (29) mit einem Frischwassereinlass (35), einem Schmutzwasserauslass (37) und/oder mit einer Spannungsversorgung verbunden ist,
wobei die Versorgungseinrichtung (21) und die Bodenreinigungsmaschine (1) derart ausgestaltet sind, dass dann, wenn die erste und die zweite Kopplungsanordnung (11, 29) miteinander verbunden sind, Frischwasser von dem Frischwassereinlass (35) in den Frischwassertank gefördert werden kann und/oder Schmutzwasser aus dem Schmutzwassertank zum Schmutzwasserauslass (37) gefördert werden kann und/oder die Batterie mit der Spannungsversorgung verbunden ist,
**dadurch gekennzeichnet, dass**
das Verfahren (100) die folgenden Schritte umfasst:
Betätigen der Versorgungseinrichtung (21), sodass die Versorgungseinrichtung (21) die zweite Position einnimmt,
Bewegen der Bodenreinigungsmaschine (1) entgegen der ersten Verfahrrichtung (49), vorzugsweise mittels des Fahrwerksantriebs, sodass sich die Bodenreinigungsmaschine (1) so auf die Versorgungseinrichtung (21) zu bewegt, dass während des Bewegens die erste Kopplungsanordnung (11) zu der zweiten Kopplungsanordnung (29) weist,
Koppeln der Bodenreinigungsmaschine (1) und der Versorgungseinrichtung (21) durch Verbinden der ersten Kopplungsanordnung (11) mit der zweiten Kopplungsanordnung (29),
Fördern von Frischwasser von dem Frischwassereinlass (35) in den Frischwassertank und/oder Fördern von Schmutzwasser aus dem Schmutzwassertank zum Schmutzwasserauslass (37) und/oder Laden der Batterie mit der Spannungsversorgung,
Lösen der Verbindung zwischen der ersten und der zweiten Kopplungsanordnung (11, 29) durch Bewegen der Versorgungseinrichtung (21) entgegen der ersten Verfahrrichtung (49) aus der zweiten Position in die erste Position.

2. Verfahren (100) zum Betreiben eines Systems (57) nach Anspruch 1, wobei nach dem Lösen der Verbindung eine seitliche Schwenkbewegung der Bodenreinigungsmaschine (1) um eine vertikale Achse erfolgt, bei der die erste Kopplungsanordnung (11) gegenüber der zweiten Kopplungsanordnung (29) seitlich verschwenkt wird.

3. Verfahren (100) zum Betreiben eines Systems (57) nach Anspruch 2, wobei der Schwenkwinkel der seitlichen Schwenkbewegung mehr als 90°, vorzugsweise 180°, beträgt.

4. Verfahren (100) zum Betreiben eines Systems (57) nach einem der Ansprüche 1 bis 3, wobei vor dem Schritt des Bewegens der Bodenreinigungsmaschine (1) entgegen der ersten Verfahrrichtung (49) die Bodenreinigungsmaschine (1) vor der Versorgungseinrichtung (21) so positioniert wird, dass die erste Kopplungsanordnung (11) so zu der zweiten Kopplungsanordnung (29) ausgerichtet ist, dass sie durch eine geradlinige Bewegung aufeinander zu verbunden werden können.

5. Verfahren (100) zum Betreiben eines Systems (57) nach Anspruch 4, wobei nach dem Positionieren eine ausschließlich geradlinige Bewegung der Bodenreinigungsmaschine (1) entgegen der ersten Verfahrrichtung (49) erfolgt.

6. Verfahren (100) zum Betreiben eines Systems (57) nach einem oder mehreren der Ansprüche 1 bis 5, wobei die Bewegung entgegen der ersten Verfahrrichtung (49) für ein Zeitintervall unterbrochen wird.

7. Verfahren (100) zum Betreiben eines Systems (57) nach Anspruch 6, wobei die Bewegung entgegen der ersten Verfahrrichtung (49) nach der Unterbrechung mit gegenüber der Geschwindigkeit vor der Unterbrechung verminderter Geschwindigkeit ausgeführt wird.

8. Verfahren (100) zum Betreiben eines Systems (57) nach einem oder mehreren der Ansprüche 1 bis 7, wobei die Bodenreinigungsmaschine (1) eine Erfassungseinheit zur Erfassung von Gegenständen im Bereich der ersten Kopplungsanordnung (11) aufweist,
wobei während des Bewegens der Bodenreinigungsmaschine (1) entgegen der ersten Verfahrrichtung (49) mit der Erfassungseinheit geprüft wird, ob Gegenstände zwischen Bodenreinigungsmaschine (1) und Versorgungseinrichtung (21) vorhanden sind und
wobei, wenn die Erfassungseinheit einen Gegenstand in der Nähe der Versorgungseinrichtung (21) erfasst, das Bewegen der Bodenreinigungsmaschine (1) entgegen der ersten Verfahrrichtung (49) gestoppt wird.

9. Verfahren (100) zum Betreiben eines Systems (57) nach einem oder mehreren der Ansprüche 1 bis 8, wobei die erste Kopplungsanordnung (11) ein Schmutzwasserventil (15) aufweist, das mit dem Schmutzwassertank verbunden ist,
wobei das Schmutzwasserventil (15) eine geschlossene Stellung und eine geöffnete Stellung hat und durch Betätigen eines Betätigungselements (17) von der geschlossenen Stellung in die geöffnete Stellung überführt werden kann,
wobei, wenn das Schmutzwasserventil (15) in der geöffneten Stellung ist und die erste Kopplungsanordnung (11) mit zweiten Kopplungsanordnung (29) verbunden ist, Schmutzwasser aus dem Schmutzwassertank zu dem Schmutzwasserauslass (37) gefördert werden kann,
wobei die Versorgungseinrichtung (21) einen Betätiger (39) aufweist, der mit dem Betätigungselement (17) eingreifen kann, wenn die erste und die zweite Kopplungsanordnung (11, 29) verbunden sind,
wobei zum Fördern von Schmutzwasser aus dem Schmutzwassertank zum Schmutzwasserauslass (37) der Betätiger (39) mit dem Betätigungselement (17) eingreift und das Schmutzwasserventil (15) in die geöffnete Stellung überführt.

10. Verfahren (100) zum Betreiben eines Systems (57) nach Anspruch 9, wobei nach dem Fördern des Schmutzwassers aus dem Schmutzwassertank zu dem Schmutzwasserauslass (37) ein Zuführen von Frischwasser, vorzugsweise von der Versorgungseinrichtung (21), zu dem Schmutzwasserventil (15) erfolgt, während das Schmutzwasserventil (15) in der geöffneten Stellung ist, um das Schmutzwasserventil (15) zu spülen.

11. Verfahren (100) zum Betreiben eines Systems (57) nach Anspruch 10, wobei der Pegel in dem Schmutzwassertank erfasst wird und
wobei das Zuführen von Frischwasser von der Versorgungseinrichtung (21) zu dem Schmutzwasserventil (15) dann erfolgt, um das Schmutzwasserventil (15) zu spülen, wenn der Pegel in dem Schmutzwassertank unter einen Minimalpegel gefallen ist

12. Verfahren (100) zum Betreiben eines Systems (57) nach einem oder mehreren der Ansprüche 1 bis 11, wobei während des Förderns von Frischwasser von dem Frischwassereinlass (35) in den Frischwassertank in der Versorgungseinrichtung (21) die Menge des geförderten Frischwassers erfasst wird,
wobei während des Förderns von Frischwasser von dem Frischwassereinlass (35) in den Frischwassertank der Pegel des Frischwassers im Frischwassertank der Bodenreinigungsmaschine (1) erfasst wird und
wobei das Fördern von Frischwasser gestoppt wird, wenn die Zunahme des Pegels im Frischwassertank nicht der erfassten Menge des geförderten Frischwassers entspricht.

13. Verfahren (100) zum Betreiben eines Systems (57) nach einem oder mehreren der Ansprüche 1 bis 12, wobei während des Förderns von Frischwasser von dem Frischwassereinlass (35) in den Frischwassertank in der Versorgungseinrichtung (21) der Pegel des Frischwassers im Frischwassertank der Bodenreinigungsmaschine (1) erfasst wird und
wobei das Fördern von Frischwasser gestoppt wird, wenn der Pegel in dem Frischwassertank einen Maximalpegel erreicht hat.

14. System (57) umfassend eine Bodenreinigungsmaschine (1) und eine Versorgungseinrichtung (21), wobei das System (57) ausgelegt ist, ein Verfahren (100) gemäß einem oder mehreren der Ansprüche 1 bis 13 auszuführen.

## Claims

1. A method (100) for operating a system (57) comprising a floor cleaning machine (1) and a supply device (21),
wherein the floor cleaning machine (1) comprises a chassis (5) having at least one wheel (7), preferably driven by a chassis drive, the chassis (5) being designed such that the floor cleaning machine (1) can be moved over a floor surface,
the floor cleaning machine (1) comprising at least one cleaning device (9) which is designed to engage with the floor surface,
the floor cleaning machine (1) comprising a fresh water container for receiving fresh water, a dirty water container for receiving dirty water and/or a rechargeable battery for supplying energy to the floor cleaning machine (1), and a first coupling arrangement (11),
the fresh water container, the dirty water container and/or the battery being connected to the first coupling arrangement (11);
the supply device (21) being displaceable on the floor surface in or counter to a preferably straight first displacement direction (49) between a first and a second position by means of a drive connected to it,
the supply device (21) being moved from the first position to the second position by a movement in the first displacement direction (49),
the supply device (21) comprising a second coupling arrangement (29) which can be connected to the first coupling arrangement (11), and the first displacement direction (49) pointing in the direction in which the second coupling arrangement (29) has to be moved in order to be connected to the first coupling arrangement (11),
the second coupling arrangement (29) being connected to a fresh water inlet (35), a dirty water outlet (37) and/or to a power supply,
the supply device (21) and the floor cleaning machine (1) being designed such that, when the first and the second coupling arrangement (11, 29) are connected to each other, fresh water can be conveyed from the fresh water inlet (35) into the fresh water tank and/or dirty water can be conveyed out of the dirty water tank to the dirty water outlet (37) and/or the battery is connected to the power supply, **characterized in that** the method (100) comprises the following steps:
actuating the supply device (21) so that the supply device (21) assumes the second position,
moving the floor cleaning machine (1) counter to the first displacement direction (49), preferably by means of the chassis drive, so that the floor cleaning machine (1) moves towards the supply device (21) in such a way that, during the movement, the first coupling arrangement (11) points towards the second coupling arrangement (29),
coupling the floor cleaning machine (1) and the supply device (21) by connecting the first coupling arrangement (11) to the second coupling arrangement (29),
conveying fresh water from the fresh water inlet (35) into the fresh water tank and/or conveying dirty water out of the dirty water tank to the dirty water outlet (37) and/or charging the battery by the power supply,
releasing the connection between the first and second coupling arrangement (11, 29) by moving the supply device (21) counter to first displacement direction (49) from the second position to the first position.

2. The method (100) for operating a system (57) according to claim 1, wherein, after the connection is released, a lateral pivot movement of the floor cleaning machine (1) about a vertical axis takes place, in which the first coupling arrangement (11) is pivoted laterally relative to the second coupling arrangement (29).

3. The method (100) for operating a system (57) according to claim 2, wherein the pivot angle of the lateral pivot movement is more than 90°, preferably 180°.

4. The method (100) for operating a system (57) according to any one of claims 1 to 3, wherein, prior to the step of moving the floor cleaning machine (1) counter to the first displacement direction (49), the floor cleaning machine (1) is positioned in front of the supply device (21) such that the first coupling arrangement (11) is aligned with the second coupling arrangement (29) so that they can be connected by a straight movement towards one another.

5. The method (100) for operating a system (57) according to claim 4, wherein, after positioning, an exclusively straight movement of the floor cleaning machine (1) is carried out counter to the first displacement direction (49).

6. The method (100) for operating a system (57) according to one or more of claims 1 to 5, wherein the movement counter to the first displacement direction (49) is interrupted for a time interval.

7. The method (100) for operating a system (57) according to claim 6, wherein the movement counter to the first displacement direction (49) after the interruption is carried out at a reduced speed relative to the speed before the interruption.

8. The method (100) for operating a system (57) according to one or more of claims 1 to 7, wherein the floor cleaning machine (1) comprises a detection unit for detecting objects in the region of the first coupling arrangement (11),
and, during the movement of the floor cleaning machine (1) counter to the first displacement direction (49), the detection unit checks whether objects are present between the floor cleaning machine (1) and the supply device (21) and,
if the detection unit detects an object near the supply device (21), the movement of the floor cleaning machine (1) counter to the first displacement direction (49) is stopped.

9. The method (100) for operating a system (57) according to one or more of claims 1 to 8, wherein the first coupling arrangement (11) comprises a dirty water valve (15) which is connected to the dirty water tank,
the dirty water valve (15) having a closed position and an open position and can be transferred from the closed position to the open position by actuating an actuating element (17),
and, when the dirty water valve (15) is in the open position and the first coupling arrangement (11) is connected to the second coupling arrangement (29), dirty water can be conveyed out of the dirty water tank to the dirty water outlet (37),
the supply device (21) comprising an actuator (39) which can engage with the actuating element (17) when the first and second coupling arrangements (11, 29) are connected,
and, in order to convey dirty water out of the dirty water tank to the dirty water outlet (37), the actuator (39) engages with the actuating element (17) and transfers the dirty water valve (15) into the open position.

10. The method (100) for operating a system (57) according to claim 9, wherein, after conveying the dirty water out of the dirty water tank to the dirty water outlet (37), fresh water, preferably from the supply device (21), is fed to the dirty water valve (15) while the dirty water valve (15) is in the open position in order to flush the dirty water valve (15).

11. The method (100) for operating a system (57) according to claim 10, wherein the level in the dirty water tank is detected and
wherein the feeding of fresh water from the supply device (21) to the dirty water valve (15) then takes place in order to flush the dirty water valve (15) when the level in the dirty water tank has fallen below a minimum level.

12. The method (100) for operating a system (57) according to one or more of claims 1 to 11, wherein, during the conveying of fresh water from the fresh water inlet (35) into the fresh water tank in the supply device (21), the quantity of conveyed fresh water is detected,
and, during the conveying of fresh water from the fresh water inlet (35) into the fresh water tank, the level of the fresh water in the fresh water tank of the floor cleaning machine (1) is detected and
the conveying of fresh water is stopped if the increase in the level in the fresh water tank does not correspond to the detected quantity of conveyed fresh water.

13. The method (100) for operating a system (57) according to one or more of claims 1 to 12, wherein, during the conveying of fresh water from the fresh water inlet (35) into the fresh water tank in the supply device (21), the level of fresh water in the fresh water tank of the floor cleaning machine (1) is detected and
the conveying of fresh water is stopped when the level in the fresh water tank has reached a maximum level.

14. A system (57) comprising a floor cleaning machine (1) and a supply device (21), the system (57) being designed to carry out a method (100) according to one or more of claims 1 to 13.

## Revendications

1. Procédé (100) de fonctionnement d'un système (57) comprenant une machine de nettoyage de sol (1) et un dispositif d'alimentation (21),
dans lequel la machine de nettoyage de sol (1) présente un châssis (5) comportant au moins une roue (7), de préférence entraînée par un entraînement de châssis, dans lequel le châssis (5) est conçu de telle sorte que la machine de nettoyage de sol (1) peut se déplacer à la surface du sol,
dans lequel la machine de nettoyage de sol (1) présente au moins un dispositif de nettoyage (9) qui est conçu pour entrer en contact avec la surface de sol,
dans lequel la machine de nettoyage de sol (1) présente un réservoir d'eau douce pour recevoir de l'eau douce, un réservoir d'eaux usées pour recevoir des eaux usées et/ou une batterie rechargeable pour alimenter en énergie la machine de nettoyage de sol (1) ainsi qu'un premier agencement d'accouplement (11),
dans lequel le réservoir d'eau douce, le réservoir d'eaux usées et/ou la batterie sont raccordés au premier agencement d'accouplement (11) ;
dans lequel le dispositif d'alimentation (21) peut être déplacé sur la surface de sol dans ou à l'encontre d'une première direction de déplacement (49) de préférence en ligne droite entre une première et une seconde position par le biais d'un entraînement qui lui est raccordé,
dans lequel le dispositif d'alimentation (21) peut être déplacé de la première à la seconde position par un mouvement dans la première direction de déplacement (49),
dans lequel le dispositif d'alimentation (21) présente un second agencement d'accouplement (29) qui peut être raccordé au premier agencement d'accouplement (11) et dans lequel la première direction de déplacement (49) pointe dans la direction dans laquelle le second agencement d'accouplement (29) doit se déplacer afin d'être raccordé au premier agencement d'accouplement (11),
dans lequel le second agencement d'accouplement (29) est raccordé à un orifice d'entrée d'eau douce (35), à un orifice de sortie d'eaux usées (37) et/ou à une alimentation en tension,
dans lequel le dispositif d'alimentation (21) et la machine de nettoyage de sol (1) sont conçus de telle sorte que lorsque le premier et le second agencement d'accouplement (11, 29) sont raccordés l'un à l'autre, l'eau douce peut être transportée de l'orifice d'entrée d'eau douce (35) vers le réservoir d'eau douce et/ou les eaux usées peuvent être transportées du réservoir d'eaux usées vers 'orifice de sortie d'eaux usées (37) et/ou la batterie est raccordée à l'alimentation en tension, **caractérisé en ce que** le procédé (100) comprend les étapes suivantes :
activation du dispositif d'alimentation (21) de sorte que le dispositif d'alimentation (21) prenne la seconde position,
déplacement de la machine de nettoyage de sol (1) à l'encontre de la première direction de déplacement (49), de préférence par le biais de l'entraînement de châssis, de sorte que la machine de nettoyage de sol (1) se déplace vers le dispositif d'alimentation (21) de telle sorte que, pendant le déplacement, le premier agencement d'accouplement (11) pointe vers le second agencement d'accouplement (29),
accouplement de la machine de nettoyage de sol (1) et du dispositif d'alimentation (21) par raccordement du premier agencement d'accouplement (11) au second agencement d'accouplement (29),
transport de l'eau douce de l'orifice d'entrée d'eau douce (35) vers le réservoir d'eau douce et/ou transport des eaux usées du réservoir d'eaux usées vers l'orifice de sortie d'eaux usées (37) et/ou chargement de la batterie par l'alimentation en tension,
désolidarisation du raccordement entre le premier et le second agencement d'accouplement (11, 29) par un déplacement du dispositif d'alimentation (21) à l'encontre de la première direction de déplacement (49) de la seconde position à la première position.

2. Procédé (100) de fonctionnement d'un système (57) selon la revendication 1, dans lequel, après la désolidarisation du raccordement, la machine de nettoyage de sol (1) pivote latéralement autour d'un axe vertical, le premier agencement d'accouplement (11) étant pivoté latéralement par rapport au second agencement d'accouplement (29).

3. Procédé (100) de fonctionnement d'un système (57) selon la revendication 2, dans lequel l'angle de pivotement du pivotement latéral est supérieur à 90 °, de préférence 180 °.

4. Procédé (100) de fonctionnement d'un système (57) selon l'une des revendications 1 à 3, dans lequel, avant l'étape de déplacement de la machine de nettoyage de sol (1) à l'encontre de la première direction de déplacement (49), la machine de nettoyage de sol (1) est positionnée devant le dispositif d'alimentation (21) de sorte que le premier agencement d'accouplement (11) est aligné avec le second agencement d'accouplement (29) de telle sorte qu'ils peuvent être raccordés l'un à l'autre par un déplacement en ligne droite.

5. Procédé (100) de fonctionnement d'un système (57) selon la revendication 4, dans lequel, après le positionnement, la machine de nettoyage de sol (1) se déplace exclusivement en ligne droite à l'encontre de la première direction de déplacement (49).

6. Procédé (100) de fonctionnement d'un système (57) selon une ou plusieurs des revendications 1 à 5, dans lequel le déplacement à l'encontre de la première direction de déplacement (49) est interrompu pendant un intervalle de temps.

7. Procédé (100) de fonctionnement d'un système (57) selon la revendication 6, dans lequel le déplacement à l'encontre de la première direction de déplacement (49) après l'interruption est effectué à une vitesse réduite par rapport à la vitesse avant l'interruption.

8. Procédé (100) de fonctionnement d'un système (57) selon une ou plusieurs des revendications 1 à 7, dans lequel la machine de nettoyage de sol (1) présente une unité de détection pour détecter des objets dans une zone du premier agencement d'accouplement (11),
dans lequel, pendant le déplacement de la machine de nettoyage de sol (1) à l'encontre de la première direction de déplacement (49), l'unité de détection vérifie si des objets se trouvent entre la machine de nettoyage de sol (1) et le dispositif d'alimentation (21) et
dans lequel, si l'unité de détection détecte un objet à proximité du dispositif d'alimentation (21), le déplacement de la machine de nettoyage de sol (1) à l'encontre de la première direction déplacement (49) est arrêté.

9. Procédé (100) de fonctionnement d'un système (57) selon une ou plusieurs des revendications 1 à 8, dans lequel le premier agencement d'accouplement (11) présente une vanne d'eaux usées (15) qui est raccordée au réservoir d'eaux usées,
dans lequel la vanne d'eaux usées (15) a une position fermée et une position ouverte et peut passer de la position fermée à la position ouverte par actionnement d'un élément d'actionnement (17),
dans lequel, lorsque la vanne d'eaux usées (15) est dans la position ouverte et que le premier agencement d'accouplement (11) est raccordé au second agencement d'accouplement (29), les eaux usées peuvent être transportées du réservoir d'eaux usées à l'orifice de sortie d'eaux usées (37),
dans lequel le dispositif d'alimentation (21) présente un actionneur (39) qui peut venir en prise avec l'élément d'actionnement (17) lorsque le premier et le second agencement d'accouplement (11, 29) sont raccordés,
dans lequel, pour transporter les eaux usées du réservoir d'eaux usées vers l'orifice de sortie d'eaux usées (37), l'actionneur (39) vient en prise avec l'élément d'actionnement (17) et fait passer la vanne d'eaux usées (15) dans la position ouverte.

10. Procédé (100) de fonctionnement d'un système (57) selon la revendication 9, dans lequel, après avoir transporté les eaux usées du réservoir d'eaux usées vers la sortie d'eaux usées (37), de l'eau douce, de préférence provenant du dispositif d'alimentation (21), est acheminée à la vanne d'eaux usées (15) tandis que la vanne d'eaux usées (15) est en position ouverte pour rincer la vanne d'eaux usées (15).

11. Procédé (100) de fonctionnement d'un système (57) selon la revendication 10, dans lequel le niveau dans le réservoir d'eaux usées est détecté et
dans lequel l'eau douce provenant du dispositif d'alimentation (21) est alors acheminée à la vanne d'eaux usées (15) afin de rincer la vanne d'eaux usées (15) lorsque le niveau dans le réservoir d'eaux usées est descendu en dessous d'un niveau minimum

12. Procédé (100) de fonctionnement d'un système (57) selon une ou plusieurs des revendications 1 à 11, dans lequel, pendant le transport d'eau douce de l'entrée d'eau douce (35) vers le réservoir d'eau douce dans le dispositif d'alimentation (21), la quantité d'eau douce transportée est détectée,
dans lequel, pendant le transport de l'eau douce de l'orifice d'entrée d'eau douce (35) vers le réservoir d'eau douce, le niveau d'eau douce dans le réservoir d'eau douce de la machine de nettoyage de sol (1) est détecté et
dans lequel le transport d'eau douce est arrêté si la hausse du niveau dans le réservoir d'eau douce ne correspond pas à la quantité d'eau douce transportée détectée.

13. Procédé (100) de fonctionnement d'un système (57) selon une ou plusieurs des revendications 1 à 12, dans lequel, pendant le transport d'eau douce de l'entrée d'eau douce (35) vers le réservoir d'eau douce du dispositif d'alimentation (21), le niveau d'eau douce dans le réservoir d'eau douce de la machine de nettoyage de sols (1) est détecté et dans lequel le transport d'eau douce est arrêté lorsque le niveau dans le réservoir d'eau douce a atteint un niveau maximum.

14. Système (57) comprenant une machine de nettoyage de sol (1) et un dispositif d'alimentation (21), le système (57) étant conçu pour mettre en œuvre un procédé (100) selon une ou plusieurs des revendications 1 à 13.
